# EUROPEAN PATENT SPECIFICATION

(11) **EP 4 498 631 B1**
(45) Date of publication and mention of the grant of the patent: **18.02.2026**
(21) Application number: 23187595.6
(22) Date of filing: 25.07.2023
(51) Int. Cl.: H04L 9/00, H04L 9/06

(54) **METHODS, UNIT AND DEVICE FOR SUCCESSIVELY EXECUTING FIRST AND NEXT BLOCK CRYPTOGRAPHIC COMPUTATIONS**
VERFAHREN, EINHEIT UND VORRICHTUNG ZUR SUKZESSIVEN AUSFÜHRUNG KRYPTOGRAFISCHER BERECHNUNGEN IN EINEM ERSTEN UND EINEM NÄCHSTEN BLOCK
PROCÉDÉS, UNITÉ ET DISPOSITIF POUR EXÉCUTER SUCCESSIVEMENT DES CALCULS CRYPTOGRAPHIQUES DE PREMIER ET DE SECOND BLOC

(43) Date of publication of application: 29.01.2025
(73) Proprietor: Nagravision Sàrl, 1033 Cheseaux-sur-Lausanne (CH)
(72) Inventor: MACCHETTI, Marco, 1033 CHESEAUX-SUR-LAUSANNE (CH); PELLETIER, Hervé, 1033 CHESEAUX-SUR-LAUSANNE (CH)
(74) Representative: Parker, Andrew James

(56) References cited:
- US-A1- 2020 244 434
- SOCHA PETR ET AL: "Side-channel countermeasures utilizing dynamic logic reconfiguration: Protecting AES/Rijndael and Serpent encryption in hardware", MICROPROCESSORS AND MICROSYSTEMS, IPC BUSINESS PRESS LTD. LONDON, GB, vol. 78, 3 August 2020 (2020-08-03), XP086304624, ISSN: 0141-9331, [retrieved on 20200803], DOI: 10.1016/J.MICPRO.2020.103208
- MACCHETTI MARCO ET AL: "A New Fast and Side-Channel Resistant AES Hardware Architecture", 2023 IEEE INTERNATIONAL CONFERENCE ON CYBER SECURITY AND RESILIENCE (CSR), IEEE, 31 July 2023 (2023-07-31), pages 572 - 579, XP034411107, DOI: 10.1109/CSR57506.2023.10224984

## Description

### Technical Field

The invention relates to methods for successively executing a first block cryptographic computation and a next block cryptographic computation using a ciphering circuit. The invention further relates to a ciphering processor unit and an electronic device configured to execute such a method, as well as to a machine-readable medium holding instructions for performing such a method.

### Background Art

The Advanced Encryption Standard (AES) is a ciphering scheme belonging to the class of block ciphers that are based on iterated substitution-permutation networks (SPNs). A "cipher" refers to an algorithm for performing encryption or decryption. In cryptography, a "block cipher" is a deterministic algorithm operating on fixed-length groups of bits, called "blocks". AES operates on fixed-sized blocks with a size of 128 bits, which are iteratively combined with keys having possible key sizes of 128, 192 or 256 bits. The data that is to be encrypted (or decrypted) by AES is transformed into a ciphertext (or a plaintext) by iteratively applying a predetermined number of operations called "rounds".

During the last twenty years, the AES algorithm has been widely adopted and ubiquitously deployed to protect sensitive data across a multitude of systems and platforms, for Internet-of-Things (IoT) and cybersecurity markets. Nowadays, AES is implemented in a variety of hardware and software combinations, ranging from dedicated instructions of modern processors, to embedded hardware/software such as secure elements and Roots-of-Trust platforms, to fast hardware variants in system-on-chip (SoC), field-programmable gate arrays (FPGAs) and dedicated application-specific integrated circuits (ASICs).

Hardware implementations of cryptosystems are susceptible to side channel attacks. Side channel attacks are passive physical attacks in which various forms of signal leakage from the operational hardware (in particular electromagnetic leaks, such as current absorption, electromagnetic emissions, etc) are intercepted and analysed in order to gain insight into the functioning of the hardware and to find ways to compromise the ciphering keys.

Considerable efforts have been spent by the research community to investigate the resistance of AES and similar iterative block ciphering methods against physical attacks, and to devise various protection strategies to improve the resistance of block ciphering methods and circuits against side-channel analysis. Many of the protection solutions that have been developed thus far come with a considerable increase of the circuit complexity and/or a performance degradation of the ciphering algorithm.

It would be desirable to obtain block ciphering software and hardware which provides good resistance against side channel attacks while avoiding an excessive reduction of ciphering performance and/or increase in circuit surface footprint.

US 2020/244434 A1 describes differential power analysis resistant encryption and decryption functions.

Socha, Petr et al.: "Side-channel countermeasures utilizing dynamic logic reconfiguration: Protecting AES/Rijndael and Serpent encryption in hardware", Microprocessors and Microsystems, IPC Business Press Ltd. vol. 78 (2020) describes the adaptation of dynamic logic configuration to Rijndael and Serpent AES techniques.

### Summary of Invention

The invention is set out in the appended set of claims.

Therefore, according to a first aspect, there is provided a method for successively executing a first block cryptographic computation and a next block cryptographic computation using a ciphering circuit. The first block cryptographic computation includes obtaining a first input block composed of a plurality of elements, and transforming the input block, via a plurality of non-linear transformations and linear transformations into a corresponding output block. Similarly, the next block cryptographic computation includes obtaining a next input block composed of a plurality of elements, and transforming the input block, via a plurality of non-linear transformations and linear transformations into a corresponding output block. The method includes implementing a functional correspondence between input and output of the non-linear transformations applied on the elements of the first input block during the first block cryptographic computation. The method further includes applying dynamical obfuscation by re-encoding the functional correspondence into a modified functional correspondence between the input and the output of the non-linear transformations applied on further elements of the next input block during the next block cryptographic computation.

The ciphering circuit is configured to execute the same non-linear transformations on the block elements in subsequent ciphering computations, but in an obfuscated manner that changes in-between the computations. Side channel leakage of actual signal values coming from part of the circuit responsible for the non-linear transformations is hereby reduced or even eliminated. The functional input-output correspondence may for instance be changed by randomly permutating or swapping elements in functional encoding tables in-between subsequent cryptographic computations. By changing the functional input-output correspondence, for instance based on changing output data that is internally generated by the ciphering circuit, the logic obfuscation is accomplished in a dynamic fashion that gradually changes during subsequent computations and which is unpredictable for a potential attacker.

Transforming of the input blocks may include transforming the elements as such (for instance by replacing each element with its inverse) and/or by changing the positions of the elements in the input blocks (for instance by interchanging the element positions). These transformations include both linear and non-linear transformations. The non-linear transformations may for instance involve multiplicative inversions calculated during element substitutions. In the context of AES or similar iterated block cryptographic methods, linear transformations may for instance involve one or more of row shifting transformations, column mixing transformation, round key addition transformations, affine transformations, and basis transformations. Such affine transformations and basis transformations may be executed in (linear) portions of the byte substitution transformations.

The method may further include the application of Boolean masking to the elements when the blocks are subjected to the linear transformations during each of the first and next block cryptographic computations.

In known threshold implementations that operate on two shares of the secret data, the two shares are subjected to similar computations. Threshold implementations in fast hardware manipulate the two shares at the same time, thereby creating the opportunity for second-order attacks like zero-offset differential power analysis (DPA). In embodiments of the method that include masking, the mask byte may be regarded as the second share of data, but the mask remains stable for a full encryption computation and is not subject to change. Due to the use of masking in linear transformations and use of obfuscation in the non-linear transformations, the only path to second-order attacks is by composing leakage from two or more bytes. This will significantly enlarge the key hypotheses space, making it more difficult to attack such embodiments at second order in comparison to known two-shares threshold implementations.

According to an embodiment, the method further includes:
- selecting, based on contents of the first output block and/or contents of a first intermediate block from an intermediate processing round, a subset from the functional correspondence applied during the first block cryptographic computation, and
- interchanging the selected subset of the functional correspondence to obtain the modified functional correspondence to be applied during the next block cryptographic computation.

Selecting the subset of correspondences may for instance involve the extraction of bits from the output block or from one or more intermediate blocks produced during the same cryptographic computation and using the extracted bits as indices for selecting those entries from encoding tables that are to be swapped before a next computation begins. The repeatedly changing of the obfuscation in-between subsequent computations is thus achieved in a manner that is difficult to infer by an attacker, but without the need to provide a dedicated pseudo-random number generator (PRNG).

In embodiments, the ciphering circuit includes one or more finite field arithmetic components. This finite field arithmetic component is configured to transform the input block by substituting one or more respective elements during the block cryptographic computations. In this case, applying the dynamic obfuscation includes:
- applying the functional correspondence between input signals and output signals of the finite field arithmetic component during the first block cryptographic computation, and
- applying the modified functional correspondence to the finite field arithmetic component during the next block cryptographic computation.

The ciphering circuit may include multiple of such finite field arithmetic components, each configured to operate on a distinct element of the block, to allow parallel processing of the elements in the block.

Each element of the respective input blocks may have a size of n bits, for instance eight bits. The finite field arithmetic component may then be configured to execute finite field arithmetic operations (e.g. finite-field addition, subtraction, multiplication, and division) on the elements using n-bit algebraic rules. The dynamic obfuscation is efficiently implemented by adapting the functional behaviour of this finite field arithmetic component.

According to a further embodiment, the finite field arithmetic component includes a multiplicative inversion subcomponent, and the modified functional correspondence is applied to the multiplicative inversion subcomponent. The arithmetic component may include multiple instances of such multiplicative inversion subcomponents, to allow the multiple elements in a block to be inverted in parallel. Preferably - but not necessarily - the modified functional correspondence is applied exclusively in the one or more multiplicative inversion subcomponents.

According to yet a further embodiment, each element in the input block has a size of one byte. In this embodiment, the multiplicative inversion subcomponent includes one or more Galois field byte inversion circuits). The Galois field byte inversion circuit is composed of a plurality of interconnected subfield operators, and each respective subfield operator is configured to operate on a finite subfield and has at least one multi-bit signal input and at least one multi-bit signal output. In this case, the application of the dynamic obfuscation may include re-encoding of the functional correspondence between respective inputs and outputs for each individual instance of the subfield operators in the Galois field byte inversion circuit.

The Galois field byte inversion circuit may for instance have a circuit architecture based on a Canright implementation operating on a normal basis subfield (see [ref. 2]), on a Satoh implementation operating on a polynomial basis subfield (see [ref.3]), or on a Nogami implementation operating on a mixed basis subfield (see [ref 4]).

Dynamically modifying the functional input-output correspondences of the sub-field operators within an n-bit finite field arithmetic component of the ciphering circuit allows a circuit architecture that is relatively easy to implement, and which efficiently reduces dynamic leakage associated with correlations between subsequent input values and switching events occurring within this non-linear component during ciphering computations.

In yet a further embodiment, the subfield operators include a plurality of first subfield operators and a plurality of second subfield operators. Each of the respective first subfield operators may include two two-bit inputs and one two-bit output and may be configured to operate on parts of a transformed element expressed in a subfield GF(2²). The individual first subfield operators may for instance be formed as a GF(2²)-adder, as a GF(2²)-multiplier, or as a GF(2²)-multiplier-scaler. Each of the respective second subfield operators may include a four-bit input and a four-bit output and may be configured to operate on parts of a transformed element expressed in a subfield GF(2⁴). The individual second subfield operators may for instance be formed as a GF(2⁴)-squarer-scaler or as a GF(2⁴)-inverter. In this case, the application of the dynamic obfuscation includes re-encoding the correspondence between the respective inputs and outputs of each individual first and second subfield operator.

Irrespective of the implementation, the modified functional correspondences are preferably - but not necessarily - applied exclusively to the subfield operators of the Galois field byte inversion circuit.

According to embodiments, the first block cryptographic computation includes computing the first output block by executing a plurality of first processing rounds based on the first input block. In addition, the method may include executing a second block cryptographic computation, concurrently with the first block cryptographic computation. This second computation includes computing a second output block by executing a plurality of second processing rounds based on a second input block. The respective first and second processing rounds may be alternatingly executed in a round-interleaved sequence.

The first input block may for instance contain random input data, such as data obtained from a (pseudo-)random number generator or other entropy source. The second input block may contain target input data, such as plaintext or ciphertext data. Intermediate results obtained from processing rounds of the random cryptographic computation propagate through the combinational logic of the ciphering circuit while being interleaved with intermediate results obtained from processing rounds of the target cryptographic computation involving actual plaintext or ciphertext data. Each move of a random block through the combinatorial cells of the ciphering circuit removes previous state information from these cells, thereby decreasing the signal-to-noise ratio (SNR) associated with potential leakage of actual signal values coming from the combinational logic (due to glitches, early propagation, etc.). In addition, if the first input block is a (pseudo-)random data block, the end of a complete random computation will yield a fresh output block which is usable as random input for a following random cryptographic computation. This fresh random output block may advantageously be used for selecting the subset of functional correspondences used during the first block cryptographic computation that are to be changed in the next block cryptographic computation, to achieve the desired functional obfuscation. The self-sustaining generation of random output blocks from each random cryptographic computation renders it unnecessary to provide a dedicated PRNG.

According to method embodiments, the first and next block cryptographic computations - and possibly also the second (concurrent) block cryptographic computation - are iterated key-alternating block cryptographic computations in accordance with the advanced encryption standard (AES). In such computations, each of the input and output blocks forms a two-dimensional state array that is composed of 4xM data elements, with each element having a size of one byte. In this case, blocks are iteratively subjected to transformations in successive rounds, and the linear and non-linear transformations acting upon the blocks are part of byte substitution transformations, row shifting transformations, column mixing transformations, and round key addition transformations.

The proposed successive cipher computation method with dynamical obfuscation in the non-linear transformations is efficiently applied to the widely adopted AES ciphering algorithm and allows a highly portable register-transfer level (RTL) description that is capable of being easily targeted to FPGA and ASIC technologies.

In further embodiments, the method may further include the application of dynamical obfuscation when processing transformed elements originating from the elements of a respective block in the byte substitution transformations, and the application of Boolean masking in the row shifting transformations, in the column mixing transformations, and in the round key addition transformations.

The application of dynamic obfuscation and Boolean masking allows protecting the non-linear and linear parts of the AES computation with a good efficiency and at relatively low implementation costs. Combining the interleaving of concurrent AES computations with the dynamic obfuscation in the byte substitution transformation and Boolean masking in other transformations within each individual AES computation yields a high overall resistance to first-order side channel analysis, thus obtaining a favourable balance between circuit size, calculation speed, and security performance.

In method embodiments wherein the ciphering circuit includes one or more finite field arithmetic components with a multiplicative inversion subcomponent, the arithmetic component may further include an affine transformation subcomponent and field basis transformation subcomponents. The basis transformation subcomponents are configured to transform block elements between a byte representation and a sub-field representation to be used by the multiplicative inversion subcomponent. In this case, the method may further include modifying the functional correspondence and applying the modified functional correspondence only in the multiplicative inversion subcomponent. The method may further include the application of the Boolean masking on the block elements when they pass through the affine transformation subcomponent and the field basis transformation subcomponents of the inversion subcomponent.

The division between Boolean masking in the linear part of the ciphering circuit/algorithm and dynamic logic obfuscation in the non-linear part of the ciphering circuit/algorithm allows protecting both parts in an easily applicable way at reasonably low costs.

In yet a further embodiment, the finite field arithmetic component includes one or more masked-to-obfuscated subcomponents and one or more obfuscated-to-masked subcomponents. These subcomponents are located at the input and output interfaces of the multiplicative inversion subcomponent. In this case, the method may further include:
- transforming, by the masked-to-obfuscated subcomponent, a masked input element directly into an obfuscated input element, and supplying the obfuscated input element to the multiplicative inversion subcomponent, and
- transforming, by the obfuscated-to-masked component, an obfuscated output element obtained from the multiplicative inversion subcomponent directly into a masked output element.

The masked output element may thus be directly supplied to a further stage of the ciphering module for executing one of the linear transformations. The resulting transition between Boolean masking in the linear part of the ciphering circuit/algorithm and the dynamic logic obfuscation in the non-linear part of the ciphering circuit/algorithm is seamless and avoids intermediate switching that might reveal information about the clear signal values.

According to a second aspect of the invention, and in accordance with the advantages and effects described herein above, there is provided a ciphering processor unit which includes the ciphering circuit and is configured to execute the method according to the first aspect.

In embodiments, the ciphering processor unit may comprise any of the components described with reference to the first aspect, such as the finite field arithmetic component including one or more multiplicative inversion subcomponents implemented as described herein. Alternatively or in addition, the ciphering processor unit may include first and second block registers and may be configured to execute a method involving concurrent execution of first and second iterated block cryptographic computations with interleaved processing rounds.

The ciphering processor unit may be configured to be selectively operated in one of at least two modes, these modes including an enciphering mode and a deciphering mode. In the enciphering mode, the first and next block cryptographic computations include successively encrypting the first and next input blocks. In the deciphering mode, the first and next block cryptographic computations include successively decrypting the first and next input blocks.

According to a third aspect of the invention, and in accordance with the advantages and effects described herein above, there is provided an electronic device including a ciphering processor unit in accordance with the second aspect. This electronic device may for instance be one of a wireless communication device, an Internet of Things device, an application-specific integrated circuit provided with cryptographic capability (such as the chip in a smartcard), or a field-programmable gate array circuit component with cryptographic capability.

According to a fourth aspect of the invention, there is provided a machine-readable medium that stores instructions for performing a method according to the first aspect, when loaded on and executed by a processing unit.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate labels appended to the reference number (for instance "131 a" and "131 b"). The reference number may be used without an appended label (e.g. "131") to generally refer to an unspecified instance or to all instances of that element.
Figure 1 shows a flow-chart of a cryptographic method in accordance with the Advanced Encryption Standard;
Figure 2 schematically shows an electronic computing device with a ciphering unit according to an embodiment;
Figure 3a schematically shows a block diagram for an AES ciphering circuit according to an embodiment;
Figure 3b schematically shows a flow diagram with encryption operations executed in the ciphering circuit from Figure 3a;
Figure 3c schematically shows a mapping of functional correspondences between input and output of one of the encryption operations from Figure 3b;
Figure 4 schematically shows a modified Canright byte-inversion circuit, according to an embodiment;
Figures 5a-5b schematically show initial and modified input-output correspondences for a subcomponent of the inversion circuit from Figure 4;
Figure 6 shows a flow-chart of a cryptographic method according to an alternative embodiment;
Figure 7 schematically shows a ciphering unit according to an embodiment;
Figure 8 schematically shows a flow diagram with encryption operations executed in an alternative method embodiment, and
Figure 9 schematically shows a ciphering system architecture according to an embodiment.

The figures are meant for illustrative purposes only, and do not serve as restriction of the scope or the protection as laid down by the claims.

### Description of Embodiments

The following is a description of certain embodiments of the invention, given by way of example only and with reference to the figures.

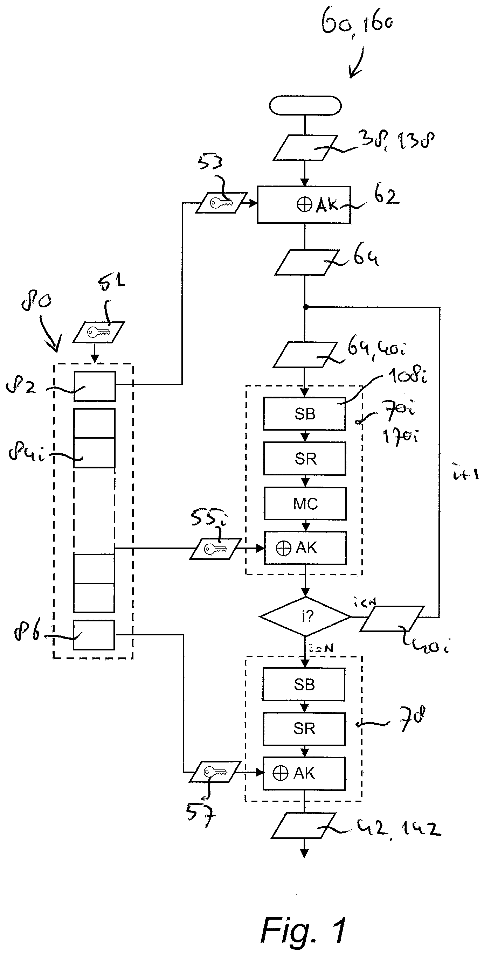

Figure 1 schematically shows an exemplary implementation of an iterated key-alternating block cryptographic computation 60 in accordance with the advanced encryption standard (AES). The specification for AES can be found in ref [1]. Several of such cryptographic computations may be executed in sequence, as indicated by reference number 160.

AES involves iterated rounds of cryptographic operations (encryption or decryption) and key expansion. As shown in Figure 1, the AES ciphering method begins executing the computation 60 with the input of an unencrypted input data block 38. The input block 38 is processed in an initial round 62, followed by multiple intermediate rounds 70i and a final round 78, to produce an output block 42. It is implicit that the initial data block 38 has first been transformed into an AES state matrix.

The term "state matrix" is used herein to refer to an ordered block of multi-bit elements that is obtained after arranging and/or processing digital input data, resulting in a multidimensional regular arrangement of rows and columns composed of these elements. In each round of AES processing, various cryptographic computations are applied on individual elements or on entire rows and/or columns of an input state matrix, thereby producing another state matrix.

Before or during the cryptographic computation 60, an input key 51 is expanded into round keys 53, 55 ,57 via a key scheduling operation 80. The obtained round keys include an initial round key 53, a plurality of intermediate round keys 55i, and a final round key 57. In this example, each round key is sixteen bytes long to match the size of the AES state matrix to which the key is being added in a respective AddRoundKey (AK) transformation.

AES utilizes a fixed block size of 128 bits and a key size of 128, 192 or 256 bits. Different versions of AES (e.g., the 256-bit variant) can include different numbers of rounds and different key sizes. In this example, AES uses a fixed block size of 128 bits, which is rearranged into sixteen elements, each with a size of one byte, and together forming a 4-rows-by-4-columns state matrix. This state matrix represents a buffer upon which the AES computations are performed. In the AES example of Figure 1, each of the blocks - i.e. block 38, 64, 40i, and 42 - is formed as a 4x4 bytes state matrix. Rijndael ciphers may work with any block size and key size that is a multiple of 32 and exceeds 128. Alternative embodiments may therefore work with different state matrix formats, for instance with 4x6 state matrices.

The cryptographic computation 60 in Figure 1 starts with an initial AddRoundKey transformation 62, in which an initial round key 53 is added to the input block 38. This transformation 62 performs a bit-wise logical exclusive disjunction operation ("XOR") on the input block 38 and the initial round key 53, to produce a modified input block 64, which is also structured as a state matrix. The XOR-operation (i.e. Boolean logic "exclusive OR" operation, indicated with the logic symbol ⊕) acts on two operands formed by multi-bit signal values, with the XOR acting on each corresponding pair of bits in the two operands.

At 70i, the modified input block 64 is subjected to a round of AES processing, which yields an intermediate block 40i. The computation 60 starts with a round counter i equal to 1, which is incremented in each subsequent round 70i. AES computations on single data blocks typically include nine intermediate rounds 70i after the initial round 62.

The round 70i includes four transformations of the state matrix. The state matrix sequentially undergoes a SubBytes (SB) transformation, a ShiftRows (SR) transformation, a MixColumns (MC) transformation, and an AddRoundKey (AK) transformation. The round 70i takes a data block and generates an intermediate block 40i. In this way, each newly generated intermediate data block 40i serves as input for the next processing round 70i of the cryptographic computation 60. In the last round 78, the newly generated data block 42 forms the cipher result. Different rounds use different sub-keys but have the same basic structure.

The SubBytes transformation includes sixteen byte-substitutions transformations, in which each byte element in the state matrix is substituted using an invertible but non-linear transformation. In this context, the term "linear transformation" refers to any bit-wise transformation G that, when operating on an XOR of two multi-bit signals A and B, can be written as the XOR of the transformation G acting on the individual signals, or G(A ⊕ B) = G(A) ⊕ G(B). Non-linear transformations do not comply with this relation. The byte-wise non-linear transformations in SubBytes may be implemented by a multiplicative inverse transformation combined with an affine transformation. Alternatively, the SubBytes transformation may be implemented by replacing each individual byte of the state matrix by a byte value obtained from a look-up in a pre-determined byte substitution table. This table is referred to as an "S-Box table".

The ShiftRows transformation cyclically shifts the bytes in each row of the state matrix by determined offsets. In particular, the ShiftRows transformation in AES includes a circular left shift of each row of the 4x4 state matrix, in which different rows of the 4x4 matrix are left-shifted by different amounts. The bytes in the first row of the state matrix remain unchanged, the bytes in the second row of the state matrix are left-shifted by an offset of one byte, the bytes in the third row of the state matrix are left-shifted by an offset of two bytes, and the bytes in the fourth row of the state matrix are left-shifted by an offset of three bytes.

The MixColumns transformation operates on the four individual columns of the state matrix, and combines bytes from each column using an invertible linear transformation. The MixColumns transformation takes four bytes as input and outputs four bytes, where each input byte affects all four output bytes.

The AddRoundKey transformation involves adding (XOR-ing) a respective intermediate round key 55i to the state matrix. The processing round 70i thereby ends, yielding an intermediate block 40i. Each intermediate round key 55i is uniquely derived for each processing round 70i.

At decision 71i, the computation 60 involves checking whether the round counter i is below the pre-set total number of rounds N. The value of N is determined by the length of the cipher key as defined in the AES specification (ref [1]). The value of N equals ten for a 128-bit cipher key, twelve for a 192-bit cipher key, and fourteen for a 256-bit cipher key. If the check at 71i returns true, then the computation 60 increments the counter i by 1 and stores the intermediate block 40i for a next processing round 70i.

The exemplary AES method of Figure 1 iterates through several rounds 70i of the ciphering computation 60. If check 71i indicates that the round counter i has become equal to N, then the computation 60 proceeds to the final processing round 78. This final processing round 78 includes a final SubBytes transformation, a final ShiftRows transformation, and a final AddRoundKey transformation, but omits a MixColumns transformation.

The final SubBytes and ShiftRows transformations operate on the last intermediate block 40i_{=N} as described above, and the final AddRoundKey transformation involves XOR-ing a respective final round key 57 to the resulting state matrix, thereby obtaining the output block 42 that forms the output ciphertext of the current computation 60. Once the computation 60 has yielded this output block 42, a subsequent computation 160 may commence, based on another block 138 and possibly another key as inputs.

The computation 60 in Figure 1 corresponds to the order of operations executed during encryption of an input data block 38. In a decryption computation, the input block starts out as encrypted data ("cipher text") and the output block is decrypted data (which may be plain text or cipher text in the case that the input data was encrypted multiple times). AES encryption and decryption computations are substantially similar, but the order of operations is reversed and each of the transformations is the inverse of the corresponding transformation executed during encryption. In AES, the AddRoundKey transformation is its own inverse because of the symmetric keys that are used. The inverses of the SubBytes, MixColumns, ShiftRows transformations are called InvSubBytes, InvMixColumns, and InvShiftRows, respectively.

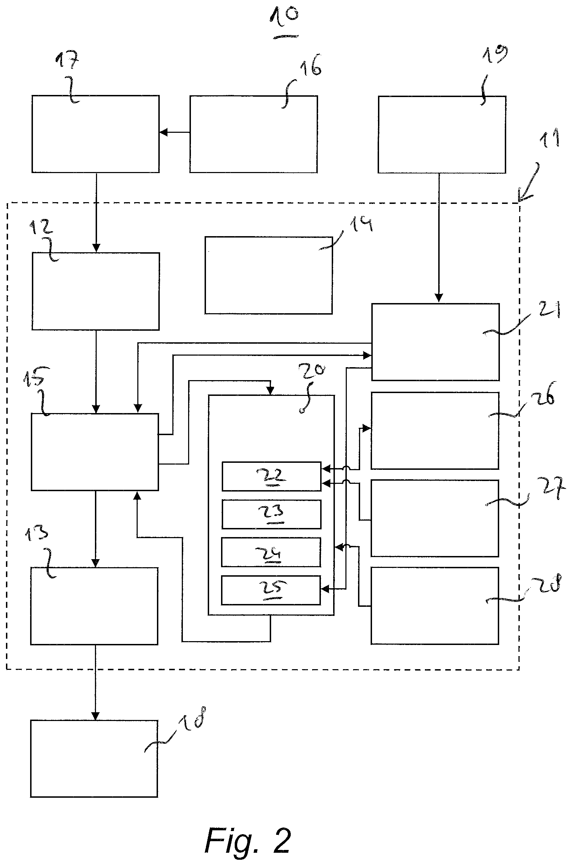

Figure 2 schematically shows an exemplary embodiment of a ciphering processor unit 11 that is part of a computing system 10 and is configured to execute one or more cryptographic computation methods described herein.

Computing device 10, which is only schematically indicated in Figure 2, may take the form of a network of digital logic gates, one or more integrated circuits, a (personal, server, network, gaming, tablet, or mobile) computer, a mobile communication device (e.g. smart phone), an Internet of Things (IoT) device, or any other computing device. The terms "computer", "server", "processor", and "memory", as used herein, all refer to electronic or other technological devices implemented with physical components and exclude (groups of) people or mental activities. The computing system 10 includes physical devices configured to execute instructions, for instance instructions that are part of one or more applications, services, programs, routines, libraries, objects, components, or data structures, and which may perform a task, implement a data type, or transform the state of a component. The computing system 10 may further include a data storage module 16, a data partitioning module 17, a data fusing module 18, and an initial pseudo random number generator PRNG module 19. The PRNG 19 is configured to machine-generate a set of random bits at least once, for instance during secure booting.

The processor unit 11 includes an input module 12, an output module 13, a control module 14, a memory module 15, a ciphering circuit 20, and a key scheduling circuit 21. The processor unit 11 further includes an S-Box module 26, an obfuscation module 27, and a masking module 28. The control module 14 is configured to coordinate the cooperation between and scheduling of the various modules 12, 13, 15, 26, 27, 28 and circuits 20, 21.

Part or all of the modules and circuits may be implemented by separate physical components, but it will be understood that alternative embodiments may include integrated modules in which any or all of these components may be combined (for instance an integrated input/output module). Functionality of the processor unit 11 may be integrated together into one or more hardware logic components. Such hardware-logic components may for instance include application-specific integrated circuits (ASICs), field-programmable gate arrays (FPGAs), system-on-a-chip (SOC), and complex programmable logic devices (CPLDs). Individual components of the processor unit 11 may be distributed among two or more separate devices, which may be remotely located and/or configured for coordinated processing. In alternative embodiments, the processor unit 11 may include one or more hardware or firmware logic machines configured to execute hardware or firmware instructions (e.g. a network of digital logic gates hardwired to implement an algorithm). Aspects of the processor unit 11 may be virtualized and executed by remotely accessible, networked computing devices configured in a cloud-computing configuration.

Plaintext or ciphertext data is obtained by the computing system 10 - for instance data received from an external device or own data generated when running an application - and stored in the data storage module 16. The partitioning module 17 divides the obtained data into suitably sized blocks and sends these in a determined (possibly but not necessarily logical/chronological) order as input blocks 38 to the input module 12 of the ciphering unit 11. The input module 12 is configured to receive input data that is to be encrypted or decrypted by the ciphering unit 11, and to store the received input data in the memory module 15.

In the example of Figure 2, the ciphering unit 11 is configured to execute cryptographic operations 60 in accordance with AES. Accordingly, the ciphering circuit 20 includes a byte substitution component 22, a row shifter component 23, a column mixer component 24 and a round key adder component 25. These components 22-25 are configured to execute SubBytes , ShiftRows, MixColumns, and AddRoundKey transformations (e.g. the AES transformations in Figure 1), and/or configured to execute InvSubBytes, InvShiftRows, InvMixColumns, and InvAddRoundKey transformations in decryption operations.

Output blocks 42 produced by the processing unit 11, through encryption or decryption by the ciphering circuit 20, are received and transmitted by the output module 13 to the data fusing module 18. The fusing module 18 is configured to merge the output blocks into ciphertext or plaintext data that is comprehensible to the application or process that initiated the encryption or decryption. In alternative embodiments, the functionalities of the partitioning and fusing modules 17, 18 may be integral part of the ciphering processing unit 11.

The computing system 10 may further comprise a communication module (not shown), which is configured to send and/or receive signal data between the computing system 10 and an external device. Such a communication module may include a modem, a network interface card (NIC), a communications port (e.g. USB port), a personal computer memory card international association (PCMCIA) card, an RFID transponder, etc. The signal data is being sent and/or received the communication module via a channel that may carry signals in electronic, electromagnetic, optical or other signal forms, and may be implemented using a wireless medium (e.g. WiFi, Bluetooth, radio), wire or cable, fibre optics, or other communication medium.

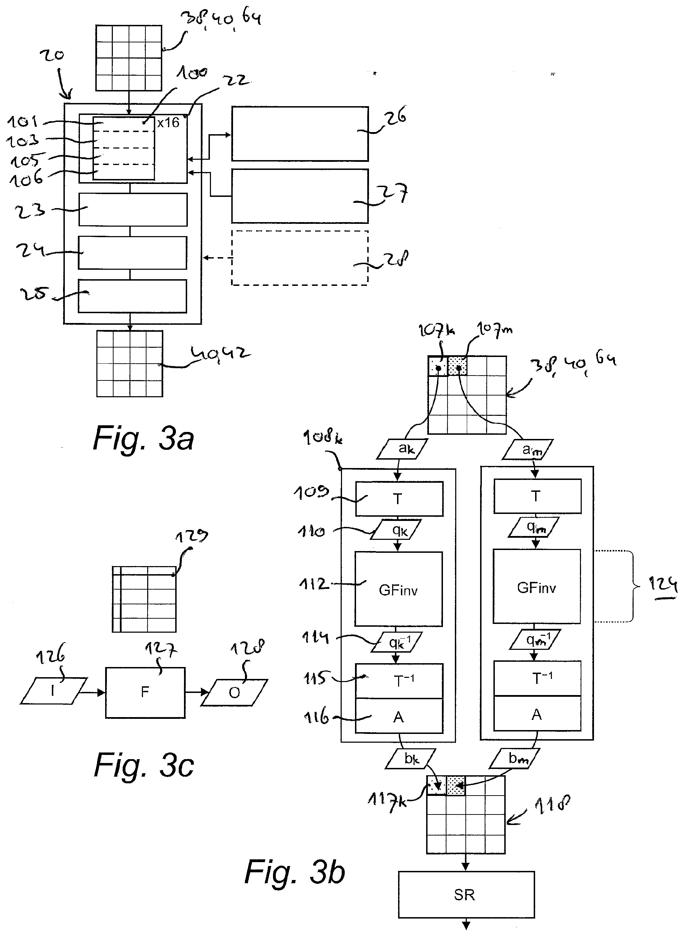

Figure 3a illustrates an exemplary data flow in an AES ciphering circuit 20 for processing a single data block (e.g. state matrix 38, 40, 64) to produce a modified block (e.g. block 40 or 42). The ciphering circuit 20 includes the byte substitution, row shifter, column mixer , and round key adder components 22-25. The AES algorithm further relies on functionality of a key scheduling circuit, which is not shown in Figure 3a. In AES, both the processing rounds and the key scheduling operations involve the use of SubBytes transformations during encryption, or InvSubBytes during decryption.

Each of the elements in a respective block (i.e. 38, 40, 42, or 64) has a size of one byte. The proposed side-channel countermeasures involve using an obfuscation module 27 for modifying the functionality of the SubBytes transformations (and/or the InvSubBytes transformations during decryption). SubBytes is a nonlinear transformation in which each individual input byte in a block is replaced by an output byte via a determined byte substitution function. The steps taking place within the (Inv)SubBytes transformation may be provided with the help of a separate S-Box module 26, which may be accessed by the byte substitution component 22 and possibly also by the key scheduling circuit.

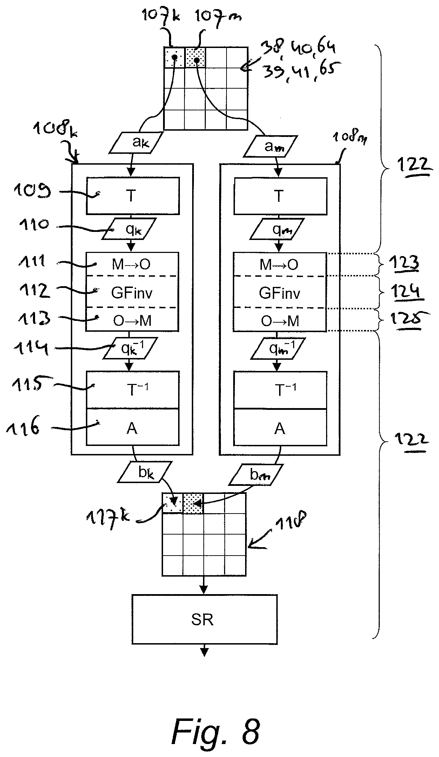

The side-channel countermeasures may optionally include a module 28 for masking the states matrices when they undergo various linear transformations applied during the processing rounds (see e.g. Figures 8-9).

In known prior techniques, the byte substitution functionality is obtained via lookup in a byte substitution table. This substitution table contains a pre-calculated one-to-one mapping between all possible eight-bit inputs and all possible eight-bit outputs. Such a lookup table requires 256 bytes of storage for the 2⁸ possible eight-bit numbers, as well as selection logic for fetching results from the table. Each byte substitution for each individual byte of the state matrix requires accessing such an S-Box table. To allow parallel SubBytes processing of an entire block in an AES round, all sixteen elements in the block require separate access to an S-Box table, thus requiring sixteen S-Box tables. If the circuit also needs to be able to decrypt, then the direct lookup approach requires another sixteen inverse S-Box tables.

Encryption and decryption in AES are generally based on polynomial operations acting on eight-bit elements in a finite binary field called a Galois Field GF(2⁸). Another known way to implement the byte substitution function involves finding the multiplicative inverse of the eight-bit element when regarded as an element of the Galois field GF(2⁸) and applying an affine transformation. In SubBytes transformations during encryption, the inversion is followed by the affine transformation, whereas in InvSubBytes transformations during decryption, the affine transformation is applied before the inversion.

The multiplicative inversion over the field GF(2⁸) is computationally the costliest operation of the S-Box function. To reduce the size and complexity of the S-Box circuitry, the present proposal instead calculates the S-Box function by means of sub-field arithmetic. This involves temporarily mapping the elements of GF(2⁸) to a Galois subfield such as GF((2⁴)²) or GF(((2²)²)²), calculating the inverse within this subfield, and then changing back to the original field GF(2⁸).

In the example of Figure 3a, the byte substitution component 22 is implemented by sixteen finite field arithmetic components 100, with each arithmetic component 100 being configured to operate on an individual byte element. The arithmetic component 100 includes a field basis transformation subcomponent 101, a multiplicative inversion subcomponent 103, a field basis back-transformation subcomponent 105, and an affine transformation subcomponent 106.

The transformation subcomponent 101 is configured to transform each byte element of the block from the regular eight-bit representation in GF(2⁸) into a Galois sub-field representation. The multiplicative inversion subcomponent 103 is configured to operate on the resulting transformed element to produce an inverted element in the sub-field. The transformation subcomponent 105 is configured to transform the inverted element back to the original field GF(2⁸). The affine transformation subcomponent 106 is configured to execute an affine transformation on either the input or the output byte, depending on whether the computation involves encryption or decryption.

In the presently proposed methods, the obfuscation takes place in the multiplicative inversion subcomponent 103, and involves modification of the functional correspondences 142 between successive ciphering operations 60, 160.

Figure 3b shows a portion of the exemplary method where SubBytes is executed. Here, each byte element aₖ, 107ₖ of the input block (38, 40 or 64) is processed and transformed via a distinct byte substitution transformation 108ₖ into an output byte bₖ, 117ₖ. The byte transformation obeys a one-to-one relation, in that each of the 2⁸ possible input bytes aₖ will correspond to a specific one of the 2⁸ possible output bytes bₖ, and vice versa. This ensures that the byte substitutions 108 are invertible.

The input byte aₖ is initially represented as polynomial coefficients in the original field GF(2⁸). At 109, which is executed by remapping subcomponent 101. The input byte aₖ is transformed by re-expressing the byte aₖ in terms of the new subfield basis, to obtain a transformed byte qₖ.

At 112, which is executed by the inversion subcomponent 103, the inverse of byte qₖ is calculated, thus obtaining an inverted byte qₖ⁻¹. Here, the Galois inverse qₖ⁻¹ is calculated using finite field arithmetic defined in the Galois subfield with corresponding basis functions.

At 115, which is executed by the back-transformation subcomponent 105, the inverted byte qₖ⁻¹ is mapped back onto the original polynomial basis in GF(2⁸).

At 116, the back-transformation 115 is directly followed by an affine transformation executed by subcomponent 106, to obtain the output byte bₖ. In this affine transformation 116, the bits of qₖ⁻¹ are scrambled by XOR-ing using four different circularly rotated versions of itself and with a special constant byte c = 0x63, which can be expressed by the invertible matrix operation bₖ = A. qₖ⁻¹ + c. This affine transformation 116 provides an invertible scrambling of the bits, wherein the additional c-byte ensures that the input byte 0x00 is re-mapped onto a non-zero value.

The byte substitutions 108 are executed separately for each byte aₖ of the input block, and the obtained bytes bₖ are reassembled into an intermediate block 118 that forms the input of the following ShiftRows transformation. Preferably, the byte substitutions 108i for each of the sixteen input bytes aₖ of one block are executed in parallel by sixteen identical copies of the field arithmetic component 100.

In the presently proposed methods, logical obfuscation 124 is implemented in the inversion subcomponent 103. This obfuscation applies to the signals when they proceed through the calculation of multiplicative inverses 112, and the part of the signal path in which these inverse calculations 112 take place is referred to herein as the "obfuscated domain" 124. The proposed obfuscation has a dynamical character, because the obfuscation is changed in-between subsequent ciphering computations 60 and 160.

Figure 3c generally illustrates a functional relation F, 127 between the input signals 126 (i.e. the set of all possible input bytes aₖ) and the output signals 128 (i.e. the set of all possible output bytes bₖ) of a byte substitution operation 108. As mentioned above, the functional relation 127 is a one-to-one function F with a finite countable set of discrete input and output values 126, 128. The function F can be represented by an encoding table 129 (or "logical truth table") of finite length, containing the relation between all possible multi-bit inputs 126 and the corresponding multi-bit outputs 128 of this function F.

The proposed dynamic obfuscation 124 involves modifying the functional correspondences 127 between the input signals 126 and output signals 128 of the finite field arithmetic components 100 after each ciphering computation 60. This modification yields a fresh set of functional correspondences in the finite field arithmetic component 100, which is then applied during the byte substitution transformation(s) in the next ciphering computation 160.

During this modification, the input signals 126 and output signals 128 are re-encoded in a way that is known to the processing unit 11 but is seemingly arbitrary and unpredictable for a potential attacker. At the same time, the functional relation F between the inputs 126 and outputs 128 is modified so as to respect the global functioning of the byte substitution transformation 108.

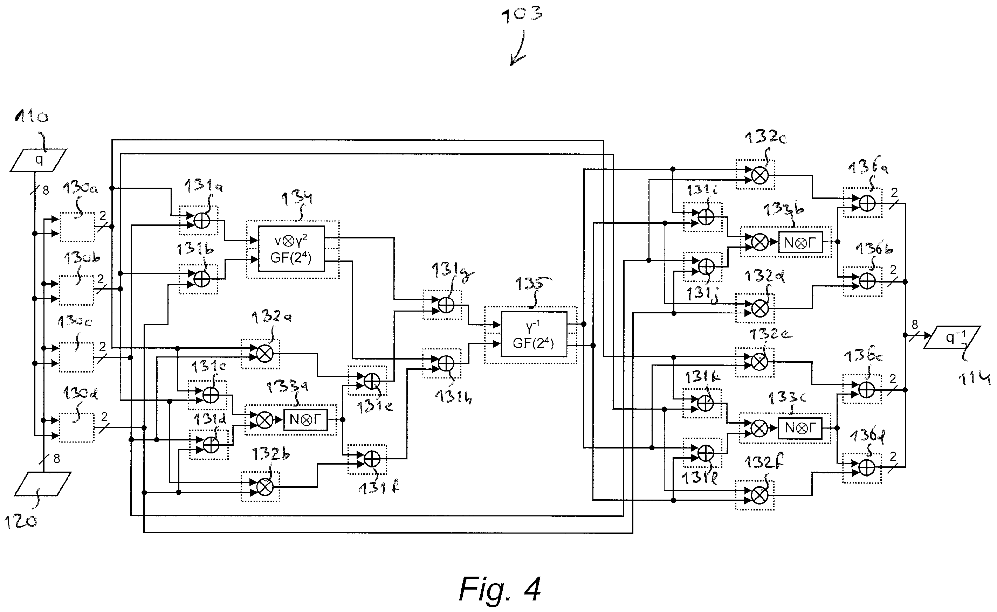

Figure 4 illustrates a schematic of an exemplary inversion subcomponent 103, which has been implemented using a Canright GF(2⁸) inverter architecture operating on a normal basis subfield. This modified Canright inverter 103 is configured to execute the calculation 112 of a multiplicative inverse of a byte element (see Figure 3b), with the modification allowing the calculation 112 to proceed in obfuscated form 124. The byte-level mapping transformations 109, 115 and the affine transformation 116 are not part of the inversion circuit 103. The byte substitution component 22 (e.g. in Figure 3a) may include sixteen instances of such Canright-based inversion circuits 103, to allow parallel processing on all elements qₖ in one state matrix.

The exemplary circuit 103 from Figure 4 is composed of a plurality of interconnected subfield operators 131, 132, 133, 134, 135, 136, comprising twelve GF(2²) adders 131, six GF(2²) multipliers 132, three GF(2²) multiplier-scalers 133, a GF(2⁴) squarer-scaler 134, a GF(2⁴) inverter 135, and four final GF(2²) adders 136.

Optionally, the inversion subcomponent 103 may include a plurality of masked-to-obfuscated mapping operators 130 near the input of the circuit, and the final GF(2²) adders 136 located near the output of the circuit 103 may be configured to provide obfuscated-to-masked mapping operations. These optional masking features will be further discussed with reference to Figures 8-9.

In this architecture, the GF(2²) adders 131, GF(2²) multipliers 132, GF(2²) multiplier-scalers 133, and final GF(2²) adders 136 have been decomposed down to subfield GF(2²). Each of the GF(2²) subfield operators 131, 132, 133, 136 comprises two input ports and one output port. Each of these ports is configured to convey a two-bit signal, and the corresponding GF(2²) subfield operator is configured to operate on two two-bit signals associated with the subfield GF(2²). The GF(2⁴) squarer-scaler 134 and GF(2⁴) inverter 135 have been decomposed down to subfield GF(2⁴). Each of the GF(2⁴) subfield operators 134, 135 comprises an input port for conveying a four-bit input signal as well as an output port for conveying a four-bit output signal. These GF(2⁴) subfield operators are configured to operate on a four-bit signal associated with the subfield GF(2⁴). Further details of the normal-basis GF(2⁸) inverter and the decomposition of its normal-basis GF(2⁴) multipliers into GF(2²) subfield operators can be found in section 2 of Canright's paper (ref. [2]).

Canright's architecture is a very suitable candidate for simplifying the logic obfuscation 124 applied to the inversion subcomponent 103, because the smaller subfield operators 131, 132, 133, 134, 135, 136 obtained from decomposing the GF(2⁸) inversion can be independently obfuscated. Applying the dynamic obfuscation 124 comprises re-encoding the individual correspondences between respective input and output signals for each individual subfield operators 131, 132, 133, 134, 135, 136.

In the present proposal, all wires in the Canright inversion circuit of Figure 4 are separately obfuscated by re-encoding their signal values in a different way. This corresponds to composing random functions with the subfield operators 131, 132, 133, 134, 135, 136, such that a different representation of the same function is obtained in/after each cryptographic computation 60, 160. The obfuscation 124 involves maintaining an encoding table of four entries for two-bit wires and maintaining an encoding table of sixteen entries for four-bit wires. Since each of the subfield operators 131, 132, 133, 134, 135, 136 in Figure 4 has a total of four input bits, this implies maintaining an encoding table of sixteen values for each subfield operator 131, 132, 133, 134, 135, 136, resulting in similar implementation complexity each of these operators. Encoding of the output will be done in terms of two-bit bundles.

It will be understood that the possible implementations of the inversion subcomponents 103 are not limited to a Canright-based circuit design. In alternative embodiments, the inversion subcomponents may be implemented according to a Satoh implementation operating on a polynomial basis subfield (see e.g. [ref.3]), on a Nogami implementation operating on a mixed basis subfield (see e.g. [ref 4]), or on various other circuits that implement the byte inversion by means of several Galois subfield components.

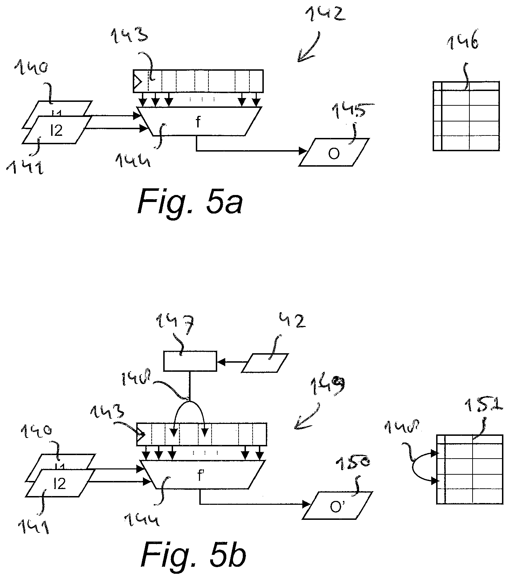

Figures 5a-5b illustrate an exemplary implementation of logic obfuscation 124 as applied to a single subfield operator in the byte inversion subcomponent 103. In this example, the combinatorial function for selecting and changing the obfuscation is implemented with the use of registers and multiplexers.

Figure 5a illustrates that a respective one of the GF(2²) subfield operators 131, 132, 133, 136 has two input ports for receiving two corresponding two-bit input signals 140, 141, as well as one output port for emitting a two-bit output signal 150. The finite set of functional correspondences f, 142 between all possible four-bit input signals 140, 141 and all corresponding two-bit output signals 145 is stored in a 32-bit register 143. The function f describing the finite set of possible input-output correspondences 142 for the subfield operator may be represented by an encoding table 146.

As illustrated in Figure 3c, the Canright circuit 103 embodies a one-to-one functional correspondence 127 between all possible eight-bit inputs and all possible (inverted) eight-bit outputs. By contrast, the functional correspondence 142 for each individual subfield operator 131, 132, 133, 136 does not necessarily possess this one-to-one property, except for the GF(2⁴) inverter 135 and the GF(2⁴) squarer-scaler 134.

The values in register 143 are in signal connection with sixteen input ports of a 16-to-1 composite multiplexer 144 (or a tree of interconnected multiplexers). The individual input ports of the multiplexer 144 correspond with the individual values for the sixteen possible outputs 145 of the function f (which includes duplicate output values when f is not one-to-one). The multiplexer 144 is configured to select a particular entry from the register 143 and to emit this selected entry as output signal 145 at the output port of the multiplexer 144. The two input signals 140, 141 of the subfield operator are supplied to the two selector ports of the multiplexer 144, and are thus used to select one of the sixteen entries from the register 143 as the present output signal 145. The encoding table 146 effectively defines the relation between the input signals 140, 141 and the register addresses with output values 145. Depending on the selected addressing relation as is stored in the encoding table 146, this combination of register 143 and multiplexer 144 can be configured to produce the logical behaviour of any of the subfield operators.

Figure 5b illustrates an implementation of dynamic logic obfuscation 124 applied to a single subfield operator that is initially characterised by the function f in Figure 5a. The behaviour of the subfield operator can be dynamically modified by changing the set of possible function outputs for this subfield operator, for instance by swapping 148 the corresponding bits in the register 143. The proposed obfuscation mechanism includes selector logic 147 that performs the swapping 148 of entries in the register 143 based on externally given selection indices. The swapping 148 may for instance take place in one clock cycle during the loading of the input block 38, 138 in each cryptographic computation 60, 160, to avoid incurring introducing performance overheads.

Each encoding table 146 is addressed by a set of four bits composed of the two-bit first input 140 and two-bit second input 141. One of the inputs (e.g. 140) will act as the most significant part of the table address, while the other one (e.g. 141) will act as least significant part. The selector logic 147 may be configured to swap blocks of four entries in the table 146 in case the encoding of the most significant part changes, whereas the control logic 147 may be configured to swap entries that are separated by steps of four in case the encoding of the least significant part changes. The control logic 147 may further be configured to swap 148 the two concerned entries in the register table 146 when the output encoding changes, thereby obtaining a modified encoding table 151.

In the embodiment of Figure 1, the cryptographic computation 60 produces an output block 42, 142. In that case, the method may include extracting information (e.g. random bits) from the output block 42 to indicate the particular entries in the encoding registers 143 that are to be swapped 148 so as to achieve the logical obfuscation 124 in the subsequent ciphering computation 160.

The same re-ordering instruction will be supplied to the registers 143 of other subfield operators in the circuit 103 that share a common signal between one of their input or output ports. This ensures that when a signal on a net of this circuit 103 is re-encoded as result of an obfuscation instruction, all subfield operators that emit or receive this signal will evolve together to maintain overall functional correctness of the obfuscation.

By repeatedly re-ordering e.g. swapping 148 the content of the registers 143 for the subfield operators 131, 132, 133, 134, 135, 136, the encoding relations f between the inputs 140, 141 and outputs 145 of the operators - and thereby also the overall encoding relation F between the inputs 126 and the outputs 128 of the overarching byte inversion function 112 of the Canright circuit 103 - are incrementally obfuscated in an efficient yet non-trivial manner.

In the exemplary implementation, the combined transformation function provided by the entirety of subfield operators 131, 132, 133, 134, 135, 136 that make up the Canright inverter circuit 103 is re-set at each startup of the circuit 103, and this combined function is repeatedly changed in a step-wise manner (i.e. in a discrete incremental manner) during functioning of the circuit 103, by randomly swapping elements in the encoding tables 146 after each full AES cryptographic computation 60, 160.

Adapted versions of the register, multiplexer and selector logic may be constructed for the GF(2⁴) subfield operators 134, 135, to accommodate the function and obfuscation of a four-bit input selection and four-bit output signal.

The reset values of the control logic 147 are preferably matched to the specification of the original logical function provided by the subfield operator 131, 132, 133, 134, 135, 136. This ensures that the original (i.e. non-obfuscated) operator functions f are deployed during startup of the circuit 103, without needing to load the specification of these operator functions f.

The described selector logic may be replicated to implement obfuscation in each of the subfield operators 131, 132, 133, 134, 135, 136 of the inverter subcomponent 103. Alternatively or in addition, the register 143 of one particular subfield operator in one inverter circuit 103 may be shared by all other identical subfield operators located in the same part of each of the other fifteen circuits 103, so that all byte elements in the block are subjected to the same obfuscation.

The dynamical obfuscation 124 applied in subsequent cryptographic computations 60, 160 reduces or even completely removes (first order) leakage from the non-linear part of the byte substitution transformations 108 executed in the ciphering unit 11. In further embodiments, the obfuscation is combined with other side-channel countermeasures to improve the resistance of other parts of the ciphering unit 11 against side-channel attacks.

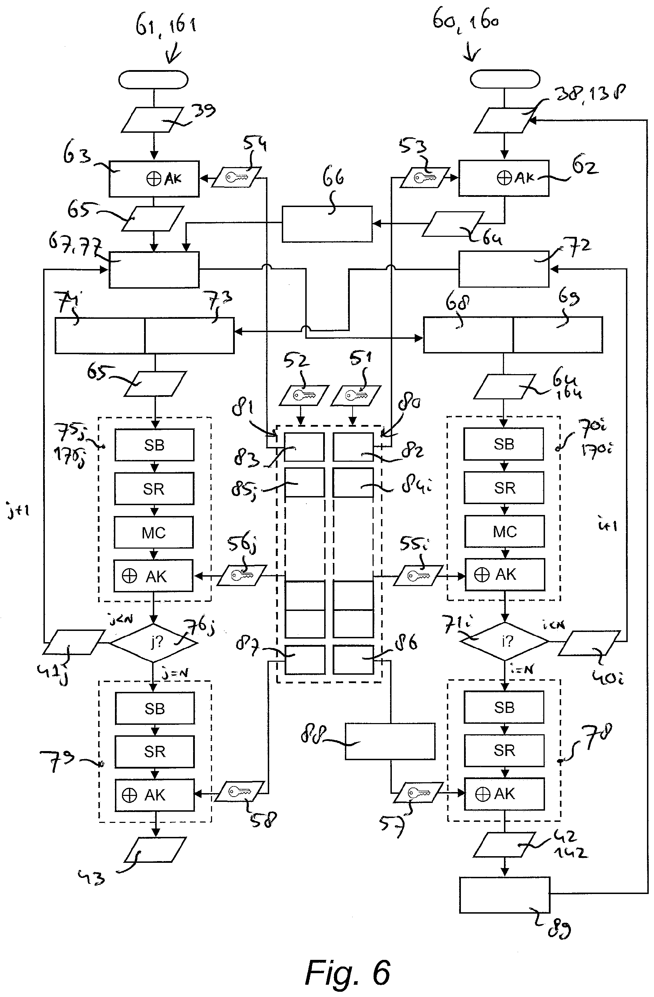

Figure 6 schematically shows an exemplary implementation of an interleaved block cryptographic computation method, which involves concurrent first and second iterated key-alternating block cryptographic computations 60, 61 in accordance with AES. In the exemplary method shown in Figure 6, the input blocks 38, 39 are concurrently processed in two corresponding initial rounds 62, 63, two corresponding sets of multiple intermediate rounds 70i, 75j, and two corresponding final rounds 78, 79, to produce output blocks 42, 43.

In the example of Figure 6, the first block cryptographic computation 60 takes random values as the first input block 38 and is herein referred to as a "random block computation". By contrast, the second block cryptographic computation 61 takes actual values (e.g. plaintext data in case of an encryption computation, or encrypted data in case of a decryption computation) as the second input block 39, and is herein referred to as a "target block computation". The second input block 39 may be unencrypted data ("plaintext") or previously encrypted data ("cipher text"), and the output block 43 produced by the second computation 61 may then be single or double encrypted cipher text. The input block 39 may be a sub-portion from any computer-readable data, such as a portion of digital video content, image content, audio content, a computer message, a secure transmission, or any other string of values that can be encoded as bits. It is implicit that the computer-readable data is partitioned in advance or on-the-fly into the discrete blocks taken as input by the computations 60, 61.

Before or during the cryptographic computations 60, 61, the first and second input keys 51, 52 are expanded into round keys 53-58 during key scheduling operations. The resulting round keys include the first and second initial round keys 53, 54, the first and second intermediate round keys 55, 56, and the first and second final round keys 57, 58. In this example, each round key matches the size of the AES state matrix to which the key is added in a respective AddRoundKey transformation.

The exemplary AES ciphering method in Figure 6 enters the first computation 60 with the input of an unencrypted random input data block 38, and concurrently enters the second computation 61 with the input of an unencrypted plaintext input data block 39. The data blocks 38 and 39 are formed as AES state matrices.

The random computation 60 starts with the first AddRoundKey transformation 62, where the first initial round key 53 is added to (XOR-ed) the random input block 38, to produce a modified first input block 64 forming an intermediate AES state matrix. Concurrently, the target computation 61 starts with the second AddRoundKey transformation 63, in which the second initial round key 54 is XOR-ed with the plaintext input block 39, to get a modified second input block 65. The modified first input block 64 is stored (e.g. in a second block register 33) at 66, and the modified second input block 65 is stored (e.g. in a first block register 32) at 67.

At 68, the modified first input block 64 is subjected to a round of AES processing 70i, to obtain a first intermediate block 40i. The first computation 60 starts with a first round counter i equal to 1 and increments this counter i by 1 in each subsequent round 70i. AES computations on single data blocks typically include nine intermediate rounds 70i after the initial round 62.

The first round 70i includes four transformations on the state matrix. The state sequentially undergoes a SubBytes transformation, a ShiftRows transformation, a MixColumns transformation, and an AddRoundKey transformation. The round 70i takes a data block and generates an intermediate block 40i. The AddRoundKey transformation involves XOR-ing a first intermediate round key 55i to the state matrix. Each newly generated intermediate data block 40i serves as input for a next processing round 70ᵢ₊₁ of the same cryptographic computation.

At decision 71i, the first computation 60 involves checking whether the counter i is below the total number of rounds N. If the check at 71i returns true, then the computation 60 increments the round counter i by 1 and stores the first intermediate block 40i (e.g. in the first block register 32) at 72. The first computation 60 then waits and the second computation 61 becomes active.

At 73, the modified second input block 65 proceeds through a round 75j of second AES processing. The second round 75j also involves the above-mentioned four transformations in which the state matrix of the modified second input block 65 is subjected to SubBytes, ShiftRows, MixColumns, and AddRoundKey transformations, to produce a second intermediate block 41j. Also in this case, logic obfuscation is applied within the SubBytes transformation. Each newly generated intermediate data block 41j serves as input for a next processing round 75ⱼ₊₁.

In this case, the AddRoundKey transformation involves XOR-ing a second intermediate round key 56j to the state matrix of the target computation 61 to obtain a second intermediate block 41j. Each second intermediate round key 56j is unique (i.e. distinct from previous round keys 56 as well as distinct from round keys 55i of the first computation 60), and produced by the key scheduling circuit 21 for each second processing round 75j.

At evaluation 76j, the second computation 61 involves checking whether the counter j is below the total number N (the same N as in the first computation 60). If the check at 76j returns true, the computation 61 increments the second counter j by 1 and stores the second intermediate block 41j (e.g. in the first block register 32) at 77. The second computation 61 then waits while the first computation 60 initiates a next round 70ᵢ₊₁ of AES transformations.

The exemplary AES method of Figure 6 concurrently iterates through several rounds 70i and 75j for each of the first and second ciphering computations 60, 61.

If the check 71i in the first computation 60 indicates that the round counter i for the first block computation 60 is equal to N, then the first computation 60 proceeds to the first final processing round 78. This final processing round 78 includes final SubBytes, ShiftRows, and AddRoundKey transformations, but omits a MixColumns transformation. The final SubBytes and ShiftRows transformations operate on the last intermediate block 40i_{=N}, and the final AddRoundKey transformation involves XOR-ing the first final round key 57 with the state matrix from the final SubBytes and ShiftRows transformations, to obtain the first output block 42 that forms the random output ciphertext.

Similarly, if the check 76j in the second computation 61 reveals that the round counter j for the second block computation 61 has become equal to N, then the second computation 61 proceeds to the second final processing round 79. This final processing round 79 also includes a final SubBytes, ShiftRows, and AddRoundKey transformations, but no MixColumns transformation. The final AddRoundKey transformation involves adding a respective second final round key 58 to the state matrix obtained from the final SubBytes and ShiftRows transformations of the second computation 61, to obtain the second output block 43 that forms the target output ciphertext.

As discussed above with reference to Figures 3a-5, logic obfuscation 124 is applied within the SubBytes transformation. In embodiments, data (e.g. bits) extracted from the output block 42 yielded by the random cryptographic computation 60 is used to select which subset of the functional correspondences f stored in the registers 143 and applied during the initial concurrent cryptographic computations 60, 61 are to be swapped 148, to obtain the modified functional correspondences f' that are to be applied during the next concurrent cryptographic computations 160, 161.

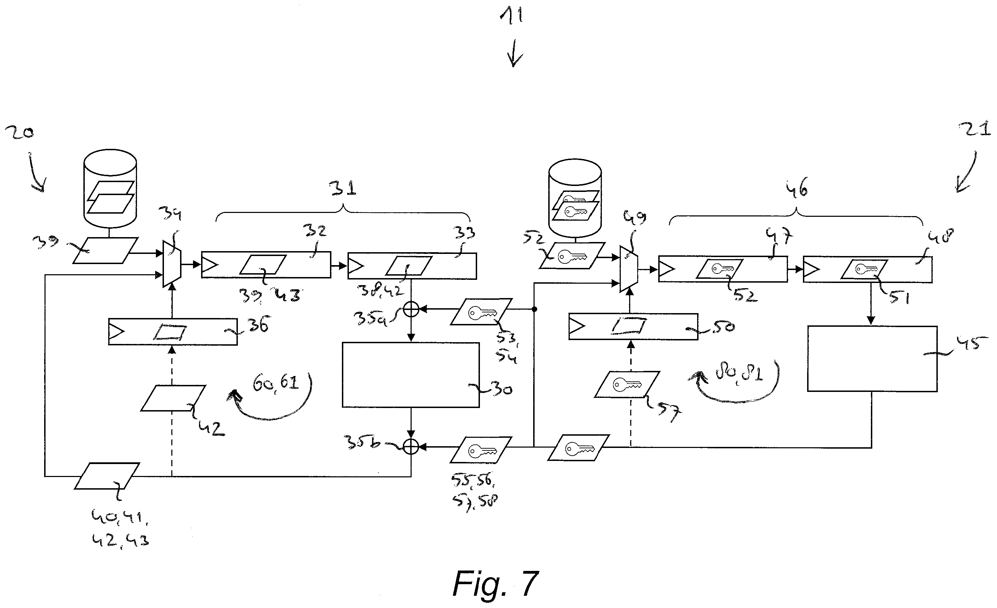

Figure 7 schematically shows an exemplary ciphering unit 11 provided with a ciphering circuit 20 and a key scheduling circuit 21 for implementing a concurrent round-interleaved cipher computation method as described above with reference to Figure 6.

The ciphering circuit 20 comprises round logic 30, a block shift register 31, a block input multiplexer 34, key adders 35a-b, and a third block register 36. The key scheduling circuit 21 comprises key scheduling logic 45, a key shift register 46, a key input multiplexer 49, and a third key register 50.

The block shift register 31 is composed of a first block register 32 and a second block register 33, which are placed in sequence and are configured to operate as a pipeline for temporarily storing and intermittently shifting two blocks of data representing the initial, intermediate, and/or final states produced during the two concurrent cryptographic computations 60, 61.

The key shift register 46 is composed of a first key register 47 and a second key register 48, which are placed in sequence and are configured to operate as a further pipeline for temporarily storing and intermittently shifting two blocks of data representing the initial, intermediate, and/or final round keys produced during the two concurrent key scheduling operations 80, 81.

In the example of Figure 7, the ciphering circuit 20 in configured to interleave the processing rounds of respective first and second computations 60, 61, thereby producing respective first and second intermediate blocks 40, 41 in an alternating sequence. Ultimately, the concurrent computations 60, 61 yield the first and second output blocks 42, 43.

Preferably, the two cryptographic computations 60, 61 are being interleaved in such a way that every net in the ciphering circuit 20 always switches from a data block (or signal value) associated with a processing round of the first computation 60, directly to a subsequent data block (or signal value) belonging to the second computation 61, and vice versa. The rounds associated with the first and second computations 60, 61 are then interleaved in a strictly alternating manner, such that none of the nets in the ciphering circuit 20 switches between two data blocks (from subsequent computation rounds) that belong to the same computation. By interleaving the data blocks of the two cryptographic computations 60, 61, the propagation of the signal values belonging to a state associated with a round of one computation through the combinational logic in the ciphering circuit 20 will remove state information associated with a preceding round of the other computation from all the combinatorial cells in the ciphering circuit 20. If the first and second computations 60, 61 are not correlated, then to a first approximation the ciphering circuit 20 will not produce dynamic leakage associated with either of the cryptographic computations 60, 61, or will at least yield a considerably lower signal-to-noise ratio (SNR) associated with undesired information leakage of the computed signal values for the target block computation 61 (e.g. relating to glitches or early propagation in the combinational logic).

At the end of the two concurrent (en- or decryption) computations 60, 61, the (en- or decrypted) target output block 43 is read out from the first block register 32, while the (en- or decrypted) random output block 42 is read out from the second block register 33 and may be stored in the third register 36 for later use. The fresh random output block 42 produced at the end of a complete random computation 60 may be used as input block 138 for a subsequent random computation, such as in the next computation 160 shown in Figure 1. The ciphering circuit 20 may be configured to execute this subsequent random computation 160 concurrently with a subsequent target computation 161, and configured to interleave the block computation rounds of these subsequent computations 160, 161 in the same manner as for the preceding random and target block computations 60, 61.

The generation of random output blocks 42 after completing each random computation 60 may be regarded as a PRNG function of the ciphering circuit 20, which removes the need to provide a distinct PRNG module. Only an initial seed is used as a source of randomness for obtaining the initial random input block 38. If the proposed ciphering unit 11 is instantiated as a peripheral in a secure enclave, then a secure CPU may charge a seed from an entropy source during the initial secure boot phase, for instance by the PRNG module 19 shown Figure 2. After this initial seeding, the ciphering circuit 20 produces pseudo-random signals in a self-sustaining manner, which renders it unnecessary for the secure CPU to refresh the seed again.

In the field of signal data obfuscation, it is known to mask a data signal when it is stored in memory and/or in transit through components or signal paths of a ciphering system. "Boolean masking" is one such known masking technique, in which the original signal S is replaced by a signal S' = S ⊕ M, wherein the symbol ⊕ represents the bit-wise XOR between the original signal S and the mask signal M. The mask M is a determined sequence of determined but meaningless binary data, which may for instance be generated at source code compilation, at runtime, or may be altered during method execution if certain conditions are fulfilled. When the signal S' is masked, the original signal S does not appear in memory or in nets of the circuit.

In the present proposal, Boolean masking is applied during the various linear transformations in the cryptographic computations. Linear transformations H obey the relation H(S') = H(S ⊕ M) = H(S) ⊕ H(M). The factored-out masked term makes it easy to remove the mask from the masked output. By contrast, the output of a non-linear transformation on a masked signal generally has no factored-out masked term, which complicates removing the mask as needed for obtaining the ciphered signal after the ciphering operation has completed.

In AES, such linear transforms include ShiftRows, MixColumns and AddRoundKey. In the exemplary method of Figure 8, which may for instance be implemented in conjunction with Figure 1 or with Figure 6, the Boolean masking is applied in the linear stages that are designated as the "masked domain 122", but the masking is not applied in the obfuscated domain 124. In particular, the masking is applied to the data blocks during the ShiftRows, MixColumns and AddRoundKey transformations, but is not applied during the non-linear part 112 of SubBytes.

To achieve low-cost masking, the mask may be a byte-size mask that is identically applied to each individual byte in any of the intermediate blocks that traverse any linear part of the ciphering circuit. Using the same mask for all bytes has the advantage that the same mask remains present, even after the relations between the input and output bytes have been severely decorrelated by the ShiftRows, MixColumns and AddRoundKey transformations.

In one exemplary method, all rounds in the computation will be masked with the same byte-level mask, so that the mask byte remains stable during a full cryptographic computation 60. The mask byte may for instance be computed once at the beginning of the cryptographic computation.

In an AES MixColumns transformation, byte elements xᵢ from different columns of the state matrix are combined according to 2x₁⊕3x₂⊕x₃⊕x₄. An unintentional direct XOR-operation between two identical masks M (i.e. M⊕M = 1) might reveal a clear value for at least some of the bytes xᵢ. Therefore, if the same byte-level mask is applied to each of the byte elements xᵢ, then the order of XOR-operations between the various byte elements xᵢ and the masks in MixColumns is preferably carefully chosen to avoid revealing clear data. Alternatively, a dedicated four-bytes mask may be applied at the input of the column mixer component 24, to enforce independence of the four elements xᵢ that are jointly involved in the MixColumns transformation. Such dedicated mask may then be removed again at the output of the column mixer component 24.

In embodiments that involve two concurrent ciphering computations with interleaved processing rounds (e.g. Figures 6-7) in which one of the computations 60, 160 is based on random data 38, 138, the mask byte used for subsequent concurrent computations 160, 161 may be derived from any intermediate block 40i or output block 42 of the preceding random computation 60, to obviate the need for a separate PRNG for generating the masks.

In the example of Figure 8, the masked domains 122 interface directly with the (unmasked) obfuscated domain 124, in that the removal and re-application of the mask occur at the boundaries of the logic obfuscation 124. This avoids intermediate switching or operations that could reveal clear signal values.

In embodiments involving AES ciphering illustrated in Figure 8, the multiplicative inversion 112 over the field GF(2⁸) is calculated by means of sub-field arithmetic, and the byte substitution component 22 includes finite field arithmetic components 100 with field basis transformation subcomponents 101, 105, a multiplicative inversion subcomponent 103, and an affine transformation subcomponent 106 (see e.g. Figure 3a). The remapping and affine transformations 109, 115, 116 also have linear properties. By contrast, the GF(2⁸) inversion 112 is non-linear. In this case, the obfuscated domain 124 may be applied only at the non-linear GF(2⁸) inversion 112, whereas the remapping and affine transformations 109, 115, 116 are joined with the other linear transformation and subjected to the masking. This allows protecting the linear and non-linear parts of the ciphering algorithm in an easily applicable manner at reasonably low costs.

Each of the byte substitutions 108 in the example of Figure 8 includes a transition 111 from masked to obfuscated (M→O) signal values, and a transition 113 from obfuscated back to masked (O→M) signal values. These transitions 111, 113 reside at the boundaries of the multiplicative inversion 112. The M→O transition 111 ensures that a masked byte element qₖ is transformed directly into an obfuscated input for the inversion 112.

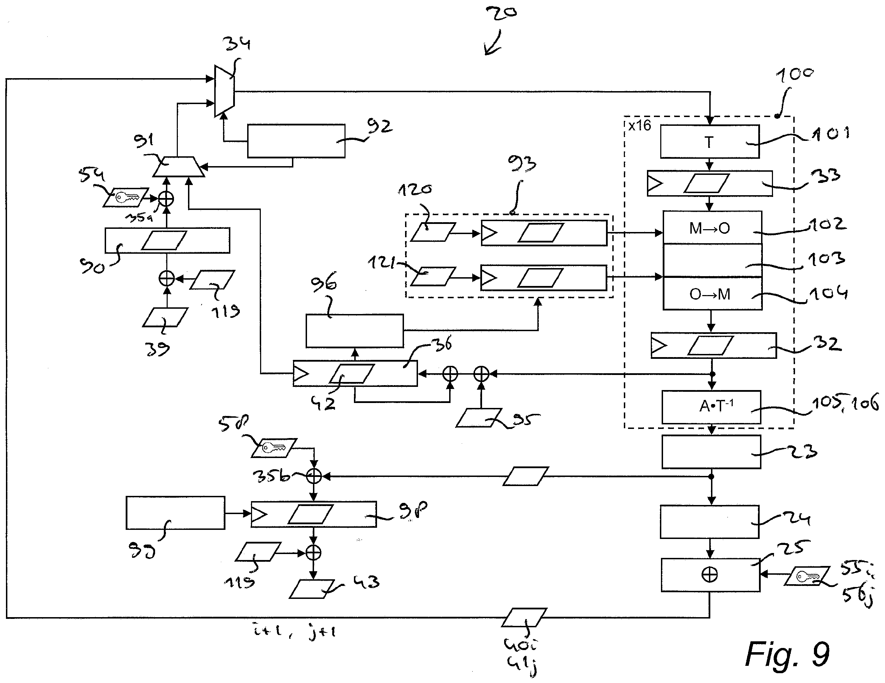

The O→M transition 111 and M→O transition 113 may for instance be implemented in the exemplary Canright-based circuit with dynamic obfuscation from Figure 4. In embodiments wherein the system applies Boolean masking in the linear transformations, the inversion circuit 103 may include four mapper operators 130 at the input of the Canright circuit 103, as well as four modified GF(2²) adders 136 located at the output of the circuit 103 to provide obfuscated-to-masked functionality. When the masked byte elements aₖ are subjected to the byte substitution 108, also the applied mask will undergo the basis and affine transformations 109, 115, 116. These transformations change the representation of the mask inside the byte substitution step 108 relative to the mask as being applied in ShiftRows, MixColumns, and AddRoundKey. The regular non-transformed mask will be indicated with numeral 119 while the transformed masks will be indicated with numerals 120 and 121 (see e.g. Figure 9)

The mapper operators 130 are configured to bring about the M→O transition 111. Each of the mapper operators 130 includes one two-bit input port for receiving a distinct two-bit portion of the transformed mask 120, and another two-bit input port for receiving part of the byte element 110, q. The mapper operator 130 modifies the received two-bit part of the byte element 110 into a two-bit un-masked signal at its output port that may pass through the inversion circuit 103.

In the obfuscated GF(2²) and GF(2⁴) operators 131, 132, 133, 134, 135, all the signal inputs and outputs convey unmasked signals, which are dynamically obfuscated 124 in-between ciphering computations as described above.

Each of the final GF(2²) adders 136 at the output of the circuit 103 is configured to receive two two-bit obfuscated input signals, and to emit a two-bit non-obfuscated but masked output signal, thus taking care of the O→M transition 113. These final GF(2²) adders 136 ensure that the inverted byte 114, q⁻¹ that forms the output of the GF(2⁸) inversion leaves the Canright circuit 103 in masked form, to be processed further by the linear parts of the algorithm. The obfuscation output encoding for these GF(2²) adders 136 may be permanently set to the identity function. The re-application of the transformed mask 120 may be achieved with a layer of XOR-operations at the output side of the encoding table 146 belonging to each of these adders 136. Alternatively, each of the GF(2²) adders 136 may include a further port (not shown in Figure 4) for receiving the two-bit portion of the transformed mask 120, to allow each of these adders 136 to reapply an appropriate part of this mask 120.

Figure 9 schematically shows an exemplary ciphering circuit 20 that implements the concurrent cryptographic computations with round-interleaving, the masking 122 applied during the various linear transformations, and the dynamic obfuscation 124 applied during the byte inversions 118 inside the inversion subcomponents 103.

The circuit 20 shown in Figure 9 is configured to operate in an enciphering mode wherein the cryptographic computation involves encryption of target data, concurrently with another computation involving encryption of random data. Figure 9 depicts a target data block 39 and a random data block indicated by a random output block 42 from a previous random computation.

The input stage of the ciphering circuit 20 includes an input register 90, a key adder 35a, a mask adder (not indicated), an initial input multiplexer 91, an initialization component 92, a round input multiplexer 34, and a random output block register 36. The mask adder is configured to add the regular mask 119 to the input block 39, and the input register 90 is configured to store the resulting block. The key adder 35a is configured to add the first round key 54 to this resulting block at the appropriate time when the block is fetched from the input register 90. The random output block register 36 is configured to receive and store the random output block 42 obtained from a preceding encryption computation. The random seed 95 in Figure 9 represents an initial 128-bit seed coming from an external source, such as a value from the external PRNG 19 during secure booting of the computing device 10 shown in Figure 2.

The initial input multiplexer 91 is configured to select either the initial random block 42 from the register 36 or the modified block of target input data coming from the adder 35a, and to forward the selected block to the round multiplexer 34. The round multiplexer 34 is configured to select and forward either the initial input blocks or subsequent blocks 40i, 41j produced by intermediate processing rounds.

The output stage of the ciphering circuit 20 includes an output register 98, a key adder 35b, a mask adder (not indicated), and a readout component 99. The key adder 35b is configured to add the final round key 58 to the block obtained from the last processing round. The obtained block is stored in the output register 98, waiting until the readout component 99 provides the instruction to furnish the block. If that happens, the mask adder re-applies the mask 119 to that block in order to yield the resulting target data block 43.

The masking and obfuscation stage of the circuit 20 includes a masking and obfuscation (M-O) controller 93 and a selector component 96. The selector component 96 is in signal connection with the output block register 36, and is configured to fetch and extract random information from this output block 42 in order to feed the swapping decisions made in the M-O controller 93.

The M-O controller 93 provides storage for the obfuscation functions 124 and the M→O and O→M transition functions 111, 113 used in invertor subcomponents 103, as well as storage for the transformed masks 120, 121 that are to be applied here. The random information from the output block 42 received from the selector component 96 may thus be used for instructing the swapping logic 147 (see e.g. Figure 5b) to change entries in the function registers 143 of the various operators in the invertor subcomponents 103 in-between subsequent ciphering computations.

The masks applied to the data blocks during the linear transformations SR, MC, and AK are the regular masks 119. By contrast, the basis and affine transformations 109, 115, 116 applied by the basis (re)mapper and affine transformer subcomponents 101, 105, 106 also affect this mask 119. The M-O controller 93 therefore receives transformed masks 120, 121.

As illustrated in Figure 9, the basis re-mapping T⁻¹ at mapper subcomponent 105 is merged with the affine transformation A at subcomponent 106 and kept separate from the GF(2⁸) inversion 103.

In this example, the masking 122 and the obfuscation 124 remain static for the entire duration of an encryption computation. The effects of the masking 122 and obfuscation 124 are thus embedded in the circuit 20 before each fresh cryptographic computation commences. The M-O controller 93 and other logic elements used for storing and setting the mask and obfuscation functions remain stable throughout the full computation, implying that no switching events will take place relating to a change of the obfuscation function 124 or the state of the masks 119, 120, 121, thus rendering the circuit 20 more robust against side channel analysis.

In alternative embodiments, the circuit 20 in Figure 9 (and other circuits described herein) may be configured to operate in a deciphering mode involving decryption of the input blocks - as an alternative or in addition to the enciphering mode. Embodiments that are configured to selectively operate in either one of these modes may reduce their circuit area usage by providing dedicated data paths for the linear transformation parts of the encryption and the decryption modes, but with obfuscated non-linear byte inversion components that are shared by the encryption and decryption modes. Switching such a multi-mode circuit between the encryption and decryption modes may for instance be implemented by multiplexers that are configured to receive encryption/decryption binary toggle signals at their selector ports, and configured to jointly maintain the circuit in the selected mode throughout the entire cryptographic computation while keeping the unused other path gated with the related inputs set to 0.

The present invention may be embodied in other specific forms. The described embodiments are to be considered in all respects only as illustrative and not restrictive. The scope of the invention is, therefore, indicated by the appended claims rather than by the foregoing description. It will be apparent to the person skilled in the art that alternative embodiments of the invention can be conceived and reduced to practice. All changes which come within the meaning and range of equivalency of the claims are to be embraced within their scope, to the extent permitted by national law.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Various methods involving subsequent block cryptographic computations with dynamical obfuscation as described herein may be tied to a computing machine, such as the device 10 shown in figure 2. The methods may alternatively be implemented as a network of digital logic gates, a computer-application program or service, a library, and/or other computer-program product.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

### Citations

[ref. 1] NIST, "Advanced Encryption Standard (AES)", FIPS publication 197, 2001.
[ref. 2] D. Canright, "A Very Compact S-Box for AES", Proceedings of CHES 2005, pp. 441-455
[ref. 3] A. Satoh et al, "A compact Rijndael Hardware Architecture with S-box Optimization", Advances in Cryptology - ASIACRYPT 2001. Lecture Notes in Computer Science, vol.2248, pp.239-254, Springer (2001)
[ref. 4] Y. Nogami et al, "Mixed Bases for Efficient Inversion in F((22)2)2 and Conversion Matrices of SubBytes of AES", 12th International Workshop on CHES. Lecture Notes in Computer Science, vol.6225, pp.234-247. Springer (2010)

## Claims

1. A method for successively executing a first block cryptographic computation (60) and a next block cryptographic computation (160) using a ciphering circuit (20) comprising one or more finite field arithmetic components (100), wherein the first and next block cryptographic computations (60; 160) include transforming a respective input block (38, 64; 138, 164) composed of a plurality of elements (aₖ, 107ₖ), via a plurality of linear transformations (109, 115, 116, SR, MC, AK) and non-linear transformations (112), into a corresponding output block (42; 142);
wherein the method comprises:
implementing a functional correspondence (142, f) between the input (140, 141) and the output (145) of the non-linear transformations (112) of the one or more finite field arithmetic components applied on the elements (aₖ) of the first input block (38, 64) during the first block cryptographic computation (60);
applying dynamical obfuscation (124) by re-encoding (148) the functional correspondence into a modified functional correspondence (149, f') between the input (140, 141) and the output (145) of the non-linear transformations of the one or more finite field arithmetic components applied on further elements (aₖ) of the next input block (138, 164) during the next block cryptographic computation (160).

2. The method according to claim 1, further comprising:
selecting (147), based on contents of the first output block (42) and/or of a first intermediate block (40i), a subset of the functional correspondence (142, f) that was applied during the first block cryptographic computation (60), and
interchanging (148) the selected subset of the functional correspondence to obtain the modified functional correspondence (149, f) to be applied during the next block cryptographic computation (160).

3. The method according to claim 1 or 2, wherein the ciphering circuit (20) includes at least one finite field arithmetic component (100), wherein each of the block cryptographic computations (60, 160) includes transforming the input block by substituting (108) respective elements (aₖ) using the finite field arithmetic component (100);
wherein applying the dynamic obfuscation (124) includes:
applying the functional correspondence (142, f) between input signals (140, 141) and output signals (145) of the finite field arithmetic component (100) during the first block cryptographic computation (60), and
applying the modified functional correspondence (149, f') to the finite field arithmetic component (100) during the next block cryptographic computation (160).

4. The method according to claim 3, wherein the finite field arithmetic component (100) comprises a multiplicative inversion subcomponent (103);
wherein the modified functional correspondence (149, f') is applied to the multiplicative inversion subcomponent (103).

5. The method according to claim 4, wherein each element (aₖ) in the input block (38, 64) has a size of one byte, and wherein the multiplicative inversion subcomponent (103) includes a Galois field byte inversion circuit composed of a plurality of interconnected subfield operators (131, 132, 133, 134, 135, 136), each respective subfield operator operating on a finite subfield and having at least one multi-bit signal input and at least one multi-bit signal output;
and wherein applying the dynamic obfuscation (124) comprises re-encoding the functional correspondence (142, f) between respective inputs and outputs for each of the subfield operators (137, 138, 139, 140),
optionally wherein the multiplicative inversion subcomponent (103) has a circuit architecture based on a Canright implementation operating on a normal basis subfield, on a Satoh implementation operating on a polynomial basis subfield, or on a Nogami implementation operating on a mixed basis subfield.

6. The method according to claim 5, wherein the subfield operators (131, 132, 133, 134, 135, 136) include:
a plurality of first subfield operators (131, 132, 133, 136), each first subfield operator comprising two two-bit inputs and one two-bit output and being configured to operate on parts of a transformed element (110, qₖ) expressed in a subfield GF(2²), and
a plurality of second subfield operators (134, 135), each second subfield operator comprising a four-bit input and a four-bit output and being configured to operate on parts of a transformed element expressed in a subfield GF(2⁴);
and wherein applying the dynamic obfuscation (124) comprises re-encoding the correspondence (142, f) between the respective inputs (140, 141) and outputs (145) for each of the first and second subfield operators (131, 132, 133, 134, 135, 136).

7. The method according to any one of claims 1-6, wherein the first block cryptographic computation (60) includes computing the first output block (42) by executing a plurality of first processing rounds (70i, 78) based on the first input block (38, 64)
wherein the method further comprises executing, concurrently with the first block cryptographic computation (60), a second block cryptographic computation (61) including computing a second output block (43) by executing a plurality of second processing rounds (75j, 79) based on a second input block (39, 65), and wherein the respective first and second processing rounds (70i, 78; 75j, 78) are alternatingly executed in a round-interleaved sequence.

8. The method according to any one of claims 1-7, wherein the method further comprises applying Boolean masking (122) to the elements when the blocks are subjected to the linear transformations (109, 115, 116, SR, MC, AK) during each of the first and next block cryptographic computations (60, 160).

9. The method according to any one of claims 1-8, wherein the first and next block cryptographic computations (60, 160) are iterated key-alternating block cryptographic computations in accordance with the advanced encryption standard, AES,
wherein each of the input and output blocks (38, 64; 42, 43) forms a two-dimensional state array composed of data elements (aₖ) of one byte each, wherein the non-linear transformations (112) are a part of byte substitution transformations (SB), and wherein the linear transformations (109, 115, 116, SR, MC, AK) include row shifting transformations (SR), column mixing transformations (MC), and round key addition transformations (AK).

10. The method according to claim 8 and 9, wherein the method further comprises:
applying the dynamical obfuscation (124) when processing transformed elements (110, qₖ) originating from the elements (aₖ) of a respective block (64) during the byte substitution transformation (SB), and
applying the Boolean masking (122) to the elements (aₖ) throughout the row shifting transformations (SR), the column mixing transformations (MC), and the round key addition transformations (AK).

11. The method according to any one of claims 4-10 when dependent on claim 4, wherein the finite field arithmetic component (100) further comprises an affine transformation subcomponent (106) and field basis transformation subcomponents (101, 105) for transforming the elements (aₖ) between a byte representation and a sub-field representation to be used by the multiplicative inversion subcomponent (103);
wherein modifying the functional correspondence (142, f) and applying the modified functional correspondence (149, f) take place only in the multiplicative inversion subcomponent (103);
and wherein optionally the Boolean masking (122) is additionally applied on the block elements passing through the affine transformation subcomponent (106) and the field basis transformation subcomponents (101, 105).

12. The method according to claim 11, wherein the finite field arithmetic component (100) includes one or more masked-to-obfuscated subcomponents (102, 130) and one or more obfuscated-to-masked subcomponents (104, 136) located at the input and output interfaces of the multiplicative inversion subcomponent (103), and wherein the method further comprises:
transforming (111), by the masked-to-obfuscated subcomponent, a masked input element (110) directly into an obfuscated input element, and supplying the obfuscated input element to the multiplicative inversion subcomponent (103), and
transforming (113), by the obfuscated-to-masked component, an obfuscated output element obtained from the inversion subcomponent (103) directly into a masked output element.

13. A ciphering processor unit (11), comprising the ciphering circuit (20) and configured to execute the method according to any one of claims 1-12.

14. The ciphering processor unit (11) according to claim 13, configured to be selectively operated in one of at least two modes, the modes including:
an enciphering mode, wherein the first and next block cryptographic computations (60, 160) include successively encrypting, by the ciphering circuit (20), the first and next input blocks (38, 138), and
a deciphering mode, wherein the first and next block cryptographic computations include successively decrypting, by the ciphering circuit (20), the first and next input blocks.

15. An electronic device (10) comprising a ciphering processor unit (11) in accordance with any one of claims 13-14, the electronic device being one of:
a wireless communication device,
an Internet of Things device,
an application-specific integrated circuit provided with cryptographic capability, and
a field-programmable gate array circuit component with cryptographic capability.

16. A machine-readable medium storing instructions, which, when executed by at least one processing unit (11), performs a method according to any one of claims 1-12.

## Patentansprüche

1. Verfahren zum aufeinanderfolgenden Ausführen einer kryptografischen Berechnung in einem ersten Block (60) und einer kryptografischen Berechnung in einem nächsten Block (160) unter Verwendung einer Verschlüsselungsschaltung (20), die eine oder mehrere Galoiskörperarithmetikkomponenten (100) umfasst, wobei die kryptografischen Berechnungen im ersten und nächsten Block (60; 160) das Transformieren eines jeweiligen aus einer Vielzahl von Elementen (aₖ, 107ₖ) bestehenden Eingangsblocks (38, 64; 138, 164) über eine Vielzahl von linearen Transformationen (109, 115, 116, SR, MC, AK) und nichtlinearen Transformationen (112) in einen entsprechenden Ausgangsblock (42; 142) umfasst;
wobei das Verfahren umfasst:
Implementieren einer funktionalen Entsprechung (142, f) zwischen dem Eingang (140, 141) und dem Ausgang (145) der nichtlinearen Transformationen (112) der einen oder mehreren Galoiskörperarithmetikkomponenten, die während der kryptografischen Berechnung im ersten Block (60) auf die Elemente (aₖ) des ersten Eingangsblocks (38, 64) angewendet werden;
Anwenden einer dynamischen Obfuskation (124) durch Neukodierung (148) der funktionalen Entsprechung in eine modifizierte funktionale Entsprechung (149, f') zwischen dem Eingang (140, 141) und dem Ausgang (145) der nichtlinearen Transformationen der einen oder mehreren
Galoiskörperarithmetikkomponenten, die während der kryptografischen Berechnung im nächsten Block (160) auf weitere Elemente (aₖ) des nächsten Eingangsblocks (138, 164) angewendet werden.

2. Verfahren gemäß Anspruch 1, ferner umfassend:
Auswählen (147), basierend auf Inhalten des ersten Ausgangsblockes (42) und/oder eines ersten Zwischenblockes (40i), einer Teilmenge der funktionalen Entsprechung (142, f), die während der kryptografischen Berechnung im ersten Block (60) angewendet wurde, und
Austauschen (148) der ausgewählten Teilmenge der funktionalen Entsprechung, um die modifizierte funktionale Entsprechung (149, f) zu erhalten, die während der kryptografischen Berechnung im nächsten Block (160) angewendet werden soll.

3. Verfahren gemäß Anspruch 1 oder 2, wobei die Verschlüsselungsschaltung (20) mindestens eine Galoiskörperarithmetikkomponente (100) umfasst, wobei jede der kryptografischen Berechnung in einem Block (60, 160) das Transformieren des Eingangsblocks durch Ersetzen (108) jeweiliger Elemente (aₖ) unter Verwendung der Galoiskörperarithmetikkomponente (100) umfasst;
wobei das Anwenden der dynamischen Obfuskation (124) umfasst:
Anwenden der funktionalen Entsprechung (142, f) zwischen Eingangssignalen (140, 141) und Ausgangssignalen (145) der Galoiskörperarithmetikkomponente (100) während der kryptografischen Berechnung im ersten Block (60) und
Anwenden der modifizierten funktionalen Entsprechung (149, f) auf die Galoiskörperarithmetikkomponente (100) während der kryptografischen Berechnung im nächsten Block (160).

4. Verfahren gemäß Anspruch 3, wobei die Galoiskörperarithmetikkomponente (100) eine multiplikative Inversionsunterkomponente (103) umfasst;
wobei die modifizierte funktionale Entsprechung (149, f') auf die multiplikative Inversionsunterkomponente (103) angewendet wird.

5. Verfahren gemäß Anspruch 4, wobei jedes Element (aₖ) im Eingangsblock (38, 64) eine Größe von einem Byte hat und wobei die multiplikative Inversionsunterkomponente (103) eine Galoiskörper-Byte-Inversionsschaltung umfasst, die aus einer Vielzahl von miteinander verbundenen Unterkörperoperatoren (131, 132, 133, 134, 135, 136) besteht, wobei jeder jeweilige Unterkörperoperator auf einem endlichen Unterkörper operiert und mindestens einen Mehrbit-Signaleingang und mindestens einen Mehrbit-Signalausgang aufweist;
und wobei das Anwenden der dynamischen Obfuskation (124) das Neucodieren der funktionalen Entsprechung (142, f) zwischen jeweiligen Eingängen und Ausgängen für jeden der Unterkörperoperatoren (137, 138, 139, 140) umfasst,
wobei optional die multiplikative Inversionsunterkomponente (103) eine Schaltungsarchitektur aufweist, die auf einer Canright-Implementierung, die auf einem Normalbasisunterkörper operiert, auf einer Satoh-Implementierung, die auf einem Polynombasisunterkörper operiert, oder auf einer Nogami-Implementierung, die auf einem Mischbasisunterkörper arbeitet, basiert.

6. Verfahren gemäß Anspruch 5, wobei die Unterkörperoperatoren (131, 132, 133, 134, 135, 136) umfassen:
eine Vielzahl von ersten Unterkörperoperatoren (131, 132, 133, 136), wobei jeder erste Unterkörperoperator zwei Zwei-Bit-Eingänge und einen Zwei-Bit-Ausgang umfasst und konfiguriert ist, auf Teilen eines transformierten Elements (110, qₖ), das in einem Unterkörper GF(2²) ausgedrückt ist, zu operieren, und
eine Vielzahl von zweiten Unterkörperoperatoren (134, 135), wobei jeder zweite Unterkörperoperator einen Vier-Bit-Eingang und einen Vier-Bit-Ausgang umfasst und konfiguriert ist, auf Teilen eines transformierten Elements, das in einem Unterkörper GF(2⁴) ausgedrückt ist, zu operieren;
und wobei das Anwenden der dynamischen Obfuskation (124) das Neucodieren der Entsprechung (142, f) zwischen den jeweiligen Eingängen (140, 141) und Ausgängen (145) für jeden der ersten und zweiten Unterkörperoperatoren (131, 132, 133, 134, 135, 136) umfasst.

7. Verfahren gemäß einem der Ansprüche 1 bis 6, wobei die kryptografische Berechnung in einem ersten Block (60) das Berechnen des ersten Ausgangsblocks (42) durch Ausführen einer Vielzahl von ersten Verarbeitungsrunden (70i, 78) basierend auf dem ersten Eingangsblock (38, 64) umfasst,
wobei das Verfahren ferner das Ausführen, gleichzeitig mit der kryptografischen Berechnung im ersten Block (60), einer kryptografischen Berechnung in einem zweiten Block (61), die das Berechnen eines zweiten Ausgangsblocks (43) durch Ausführen einer Vielzahl von zweiten Verarbeitungsrunden (75j, 79) basierend auf einem zweiten Eingangsblock (39, 65) umfasst, und wobei die jeweiligen ersten und zweiten Verarbeitungsrunden (70i, 78; 75j, 78) abwechselnd in einer rundenverschachtelten Sequenz ausgeführt werden.

8. Verfahren gemäß einem der Ansprüche 1 bis 7, wobei das Verfahren ferner das Anwenden einer booleschen Maskierung (122) auf die Elemente umfasst, wenn die Blöcke während jeder der kryptografischen Berechnungen in erstem und nächstem Block (60, 160) linearen Transformationen (109, 115, 116, SR, MC, AK) unterzogen werden.

9. Verfahren gemäß einem der Ansprüche 1 bis 8, wobei die kryptografischen Berechnungen in erstem und nächstem Block (60, 160) iterative, schlüsselalternierende kryptografische Berechnungen in einem Block gemäß dem Advanced Encryption Standard (AES) sind,
wobei jeder der Eingangs- und Ausgangsblöcke (38, 64; 42, 43) ein zweidimensionales Zustandsarray bildet, das aus Datenelementen (aₖ) mit jeweils einem Byte besteht, wobei die nichtlinearen Transformationen (112) ein Teil von Byte-Substitutionstransformationen (SB) sind und wobei die linearen Transformationen (109, 115, 116, SR, MC, AK) ShiftRows-Transformationen (SR), MixColumns-Transformationen (MC) und AddRoundKey-Transformationen (AK) umfassen.

10. Verfahren gemäß Anspruch 8 und 9, wobei das Verfahren ferner umfasst:
Anwenden der dynamischen Obfuskation (124) beim Bearbeiten transformierter Elemente (110, qₖ), die aus den Elementen (aₖ) eines jeweiligen Blocks (64) während der Byte-Substitutionstransformation (SB) stammen, und
Anwenden der Booleschen Maskierung (122) auf die Elemente (aₖ) während der ShiftRows-Transformationen (SR), der MixColumns-Transformationen (MC) und der AddRoundKey-Transformationen (AK).

11. Verfahren gemäß einem der Ansprüche 4 bis 10, wenn es von Anspruch 4 abhängt, wobei die Galoiskörperarithmetikkomponente (100) ferner eine affine Transformationsunterkomponente (106) und Körperbasistransformationsunterkomponenten (101, 105) zum Transformieren der Elemente (aₖ) zwischen einer Byterepräsentation und einer Unterkörperrepräsentation umfasst, zur Verwendung bei der multiplikativen Inversionsunterkomponente (103);
wobei das Modifizieren der funktionalen Entsprechung (142, f) und das Anwenden der modifizierten funktionalen Entsprechung (149, f') nur in der multiplikativen Inversionsunterkomponente (103) stattfindet;
und wobei optional die boolesche Maskierung (122) zusätzlich auf die Blockelemente angewendet wird, die die affine Transformationsunterkomponente (106) und die Körperbasistransformationsunterkomponenten (101, 105) durchlaufen.

12. Verfahren gemäß Anspruch 11, wobei die Galoiskörperarithmetikkomponente (100) eine oder mehrere maskiert-zu-obfuskiert-Unterkomponenten (102, 130) und eine oder mehrere obfuskiert-zu-maskiert-Unterkomponenten (104, 136) umfasst, die sich an den Eingangs- und Ausgangsschnittstellen der multiplikativen Inversionsunterkomponente (103) befinden, und wobei das Verfahren ferner umfasst:
Umwandeln (111), durch die maskiert-zu-obfuskiert-Unterkomponente, eines maskierten Eingangselements (110) direkt in ein obfuskiertes Eingangselement und Zuführen des obfuskierten Eingangselements zur multiplikativen Inversionsunterkomponente (103) und
Umwandeln (113), durch die obfuskiert-zu-maskiert-Komponente, eines von der Inversionsunterkomponente (103) erhaltenen obfuskierten Ausgangselements direkt in ein maskiertes Ausgangselement.

13. Verschlüsselungsprozessoreinheit (11) umfassend die
Verschlüsselungsschaltung (20) und konfiguriert, das Verfahren gemäß einem der Ansprüche 1 bis 12 auszuführen.

14. Verschlüsselungsprozessoreinheit (11) gemäß Anspruch 13, konfiguriert, selektiv in einem von mindestens zwei Modi betrieben zu werden, die Modi umfassend:
einen Verschlüsselungsmodus, in dem die kryptografischen Berechnungen in erstem und nächstem Block (60, 160) das aufeinanderfolgende Verschlüsseln, durch die Verschlüsselungsschaltung (20), des ersten und nächsten Eingangsblocks (38, 138) umfassen, und
einen Entschlüsselungsmodus, in dem die kryptografischen Berechnungen in erstem und nächstem Block das aufeinanderfolgende Entschlüsseln, durch die Verschlüsselungsschaltung (20), des ersten und nächsten Eingangsblocks umfassen.

15. Elektronisches Gerät (10) umfassend eine Verschlüsselungsprozessoreinheit (11) gemäß einem der Ansprüche 13-14, wobei das elektronische Gerät eines ist von:
einem drahtlosen Kommunikationsgerät,
einem Internet-of-Things-Gerät,
einer anwendungsspezifischen integrierten Schaltung, die mit kryptografischer Fähigkeit versehen ist, und einer Field Programmable Gate Array-Schaltungskomponente mit kryptografischer Fähigkeit.

16. Maschinenlesbares Medium, das Anweisungen speichert, die, wenn sie von mindestens einer Verarbeitungseinheit (11) ausgeführt werden, ein Verfahren gemäß einem der Ansprüche 1 bis 12 ausführen.

## Revendications

1. Procédé pour exécuter successivement un calcul cryptographique de premier bloc (60) et un calcul cryptographique de bloc suivant (160) à l'aide d'un circuit de chiffrement (20) comprenant un ou plusieurs composants arithmétiques à corps fini (100), dans lequel les calculs cryptographiques de premier bloc et de bloc suivant (60 ; 160) incluent la transformation d'un bloc d'entrée respectif (38, 64 ; 138, 164) composé d'une pluralité d'éléments (aₖ, 107ₖ), via une pluralité de transformations linéaires (109, 115, 116, SR, MC, AK) et de transformations non linéaires (112), en un bloc de sortie correspondant (42 ; 142) ;
dans lequel le procédé consiste à :
mettre en œuvre une correspondance fonctionnelle (142, f) entre l'entrée (140, 141) et la sortie (145) des transformations non linéaires (112) desdits un ou plusieurs composants arithmétiques à corps fini appliquées aux éléments (aₖ) du premier bloc d'entrée (38, 64) pendant le calcul cryptographique de premier bloc (60) ;
appliquer un obscurcissement dynamique (124) en recodant (148) la correspondance fonctionnelle en une correspondance fonctionnelle modifiée (149, f') entre l'entrée (140, 141) et la sortie (145) des transformations non linéaires desdits un ou plusieurs composants arithmétiques à corps fini appliquées à d'autres éléments (aₖ) du bloc d'entrée suivant (138, 164) pendant le calcul cryptographique de bloc suivant (160).

2. Procédé selon la revendication 1, consistant en outre à :
sélectionner (147), sur la base du contenu du premier bloc de sortie (42) et/ou d'un premier bloc intermédiaire (40i), un sous-ensemble de la correspondance fonctionnelle (142, f) qui a été appliquée pendant le calcul cryptographique de premier bloc (60), et
interchanger (148) le sous-ensemble sélectionné de la correspondance fonctionnelle pour obtenir la correspondance fonctionnelle modifiée (149, f') à appliquer pendant le calcul cryptographique de bloc suivant (160).

3. Procédé selon la revendication 1 ou 2, dans lequel le circuit de chiffrement (20) inclut au moins un composant arithmétique à corps fini (100), dans lequel chacun des calculs cryptographiques de bloc (60, 160) inclut le fait de transformer le bloc d'entrée en substituant (108) des éléments respectifs (aₖ) à l'aide du composant arithmétique à corps fini (100) ;
dans lequel appliquer l'obscurcissement dynamique (124) inclut le fait :
d'appliquer la correspondance fonctionnelle (142, f) entre des signaux d'entrée (140, 141) et des signaux de sortie (145) du composant arithmétique à corps fini (100) pendant le calcul cryptographique de premier bloc (60), et
d'appliquer la correspondance fonctionnelle modifiée (149, f') au composant arithmétique à corps fini (100) pendant le calcul cryptographique de bloc suivant (160).

4. Procédé selon la revendication 3, dans lequel le composant arithmétique à corps fini (100) comprend un sous-composant d'inversion multiplicative (103) ;
dans lequel la correspondance fonctionnelle modifiée (149, f') est appliquée au sous-composant d'inversion multiplicative (103).

5. Procédé selon la revendication 4, dans lequel chaque élément (aₖ) dans le bloc d'entrée (38, 64) a une taille d'un octet, et dans lequel le sous-composant d'inversion multiplicative (103) inclut un circuit d'inversion d'octets à corps de Galois composé d'une pluralité d'opérateurs de sous-corps interconnectés (131, 132, 133, 134, 135, 136), chaque opérateur de sous-corps respectif opérant sur un sous-corps fini et ayant au moins une entrée de signal multibit et au moins une sortie de signal multibit ; et
dans lequel dans lequel appliquer l'obscurcissement dynamique (124) comprend le fait de recoder la correspondance fonctionnelle (142, f) entre des entrées et sorties respectives pour chacun des opérateurs de sous-corps (137, 138, 139, 140),
en option dans lequel le sous-composant d'inversion multiplicative (103) a une architecture de circuit basée sur une implémentation Canright opérant sur un sous-corps à base normale, sur une implémentation Satoh opérant sur un sous-corps à base polynomiale ou sur une implémentation Nogami opérant sur un sous-corps à base mixte.

6. Procédé selon la revendication 5, dans lequel les opérateurs de sous-corps (131, 132, 133, 134, 135, 136) incluent :
une pluralité de premiers opérateurs de sous-corps (131, 132, 133, 136), chaque premier opérateur de sous-corps comprenant deux entrées à deux bits et une sortie à deux bits et étant configuré pour opérer sur des parties d'un élément transformé (110, qₖ) exprimé dans un sous-corps GF(2²), et
une pluralité de seconds opérateurs de sous-corps (134, 135), chaque second opérateur de sous-corps comprenant une entrée à quatre bits et une sortie à quatre bits et étant configuré pour opérer sur des parties d'un élément transformé exprimé dans un sous-corps GF(2⁴) ; et
dans lequel appliquer l'obscurcissement dynamique (124) comprend le fait de recoder la correspondance (142, f) entre les entrées (140, 141) et les sorties (145) respectives pour chacun des premiers et seconds opérateurs de sous-corps (131, 132, 133, 134, 135, 136).

7. Procédé selon l'une quelconque des revendications 1 à 6, dans lequel le calcul cryptographique de premier bloc (60) inclut le fait de calculer le premier bloc de sortie (42) en exécutant une pluralité de premiers tours de traitement (70i, 78) sur la base du premier bloc d'entrée (38, 64),
dans lequel le procédé consiste en outre à exécuter, simultanément au calcul cryptographique de premier bloc (60), un calcul cryptographique de second bloc (61) incluant le fait de calculer un second bloc de sortie (43) en exécutant une pluralité de seconds tours de traitement (75j, 79) sur la base d'un second bloc d'entrée (39, 65), et dans lequel les premiers et seconds tours de traitement respectifs (70i, 78 ; 75j, 78) sont exécutés en alternance dans une séquence de tours entrelacés.

8. Procédé selon l'une quelconque des revendications 1 à 7, dans lequel le procédé consiste en outre à appliquer un masquage booléen (122) aux éléments lorsque les blocs sont soumis aux transformations linéaires (109, 115, 116, SR, MC, AK) pendant chacun des calculs cryptographiques de premier bloc et de bloc suivant (60, 160).

9. Procédé selon l'une quelconque des revendications 1 à 8, dans lequel les calculs cryptographiques de premier bloc et de bloc suivant (60, 160) sont des calculs cryptographiques par blocs itératifs à clés alternées conformément à la norme de chiffrement avancée AES,
dans lequel chacun des blocs d'entrée et de sortie (38, 64 ; 42, 43) forme un tableau d'état bidimensionnel composé d'éléments de données (aₖ) d'un octet chacun, dans lequel les transformations non linéaires (112) font partie des transformations par substitution d'octets (SB), et dans lequel les transformations linéaires (109, 115, 116, SR, MC, AK) incluent des transformations par décalage de lignes (SR), des transformations par mélange de colonnes (MC) et des transformations par addition de clé de tour (AK).

10. Procédé selon les revendications 8 et 9, dans lequel le procédé consiste en outre à :
appliquer l'obscurcissement dynamique (124) lors du traitement d'éléments transformés (110, qₖ) provenant des éléments (aₖ) d'un bloc respectif (64) pendant la transformation par substitution d'octets (SB), et
appliquer le masquage booléen (122) aux éléments (aₖ) tout au long des transformations par décalage de lignes (SR), des transformations par mélange de colonnes (MC) et des transformations par addition de clé de tour (AK).

11. Procédé selon l'une quelconque des revendications 4 à 10 lorsqu'il dépend de la revendication 4, dans lequel le composant arithmétique à corps fini (100) comprend en outre un sous-composant de transformation affine (106) et des sous-composants de transformation de base de corps (101, 105) pour transformer les éléments (aₖ) entre une représentation en octets et une représentation en sous-corps à utiliser par le sous-composant d'inversion multiplicative (103) ;
dans lequel la modification de la correspondance fonctionnelle (142, f) et l'application de la correspondance fonctionnelle modifiée (149, f') ont lieu uniquement dans le sous-composant d'inversion multiplicative (103) ;
et dans lequel, en option, le masquage booléen (122) est en outre appliqué aux éléments de bloc passant par le sous-composant de transformation affine (106) et les sous-composants de transformation de base de corps (101, 105).

12. Procédé selon la revendication 11, dans lequel le composant arithmétique à corps fini (100) inclut un ou plusieurs sous-composants masqué-vers-obscurci (102, 130) et un ou plusieurs sous-composants obscurci-vers-masqué (104, 136) situés au niveau des interfaces d'entrée et de sortie du sous-composant d'inversion multiplicative (103), et dans lequel le procédé consiste en outre à :
transformer (111), par le sous-composant masqué-vers-obscurci, un élément d'entrée masqué (110) directement en un élément d'entrée obscurci, et fournir l'élément d'entrée obscurci au sous-composant d'inversion multiplicative (103), et
transformer (113), par le composant obscurci-vers-masqué, un élément de sortie obscurci obtenu à partir du sous-composant d'inversion (103) directement en un élément de sortie masqué.

13. Unité de traitement de chiffrement (11), comprenant le circuit de chiffrement (20) et configurée pour exécuter le procédé selon l'une quelconque des revendications 1 à 12.

14. Unité de traitement de chiffrement (11) selon la revendication 13, configurée pour fonctionner de manière sélective dans l'un d'au moins deux modes, les modes incluant :
un mode de chiffrement, dans lequel les calculs cryptographiques de premier bloc et de bloc suivant (60, 160) consistent à crypter successivement, par le circuit de chiffrement (20), le premier bloc d'entrée et le bloc d'entrée suivant (38, 138), et
un mode de déchiffrement, dans lequel les calculs cryptographiques de premier bloc et de bloc suivant consistent à décrypter successivement, par le circuit de chiffrement (20), le premier bloc d'entrée et le bloc d'entrée suivant.

15. Dispositif électronique (10) comprenant une unité de traitement de chiffrement (11) selon l'une quelconque des revendications 13 à 14, le dispositif électronique étant l'un des suivants :
un dispositif de communication sans fil,
un dispositif de l'Internet des objets,
un circuit intégré spécifique à une application doté d'une capacité cryptographique, et
un composant de circuit à réseau de portes programmable sur le terrain doté d'une capacité cryptographique.

16. Support lisible par machine stockant des instructions qui, lorsqu'elles sont exécutées par au moins une unité de traitement (11), mettent en œuvre un procédé selon l'une quelconque des revendications 1 à 12.
